# EUROPEAN PATENT APPLICATION

(11) **EP 1 605 163 A1**
(43) Date of publication of application: **14.12.2005**
(21) Application number: 04720708.9
(22) Date of filing: 15.03.2004
(51) Int. Cl.: F04B 39/02

(54) **COMPRESSOR**

(30) Priority: 14.03.2003 JP 2003070015; 18.03.2003 JP 2003073867; 22.10.2003 JP 2003361721; 28.01.2004 JP 2004019611; 28.01.2004 JP 2004019612; 28.01.2004 JP 2004019613; 28.01.2004 JP 2004019614
(71) Applicant: MATSUSHITA ELECTRIC INDUSTRIAL CO., LTD., Kadoma-shi, Osaka 571-8501 (JP)
(72) Inventor: ISHIDA, Yoshinori, Kanagawa 251-0042 (JP); NISHIHARA, Hidetoshi, Kanagawa 251-0872 (JP); KATAYAMA, Makoto, Kanagawa 253-0084 (JP)
(74) Representative: Grünecker, Kinkeldey, Stockmair & Schwanhäusser Anwaltssozietät
(86) International application number: PCT/JP2004/003394
(87) International publication number: WO 2004/081383

(57) **Abstract**

A compressor which is inexpensive and highly reliable and capable of efficiently and securely drawing up oil in a stable manner even at the time of low-revolution driving is provided. Also, a compressor which is highly reliable and capable of maintaining the structure of a viscous pump in a stable condition for a long period is provided. The compressor has a closed container which stores oil and accommodates a compressing element for compressing gas. The compressing element includes a shaft which vertically extends and rotates and a viscous pump which communicates with oil.

## Description

### Technical Field

The present invention relates to an improvement of a viscous pump for supplying oil to sliding areas of a compressor.

### Background Art

Recently, household refrigerators and air-conditioners have been increasingly and rapidly shifting to energy-saving types to meet demands for protection of the global environment . In this situation, increasing numbers of refrigerant compressors are inverter-controlled, and the number of driving revolution is decreased to reduce the rotational speed. Accordingly, it is difficult to obtain sufficient lubrication by using conventional centrifugal pumps.

A conventional compressor, which is disclosed in JP-T-2002-519589, for example, includes a viscous pump which has stable pumping capability even at the time of low-speed revolution in lieu of a centrifugal pump.

The related-art compressor mentioned above is herein described with reference to the drawings. In this description, the positional correlations in the vertical direction are shown based on the condition in which a closed type electrically-powered compressor is installed in a normal position.

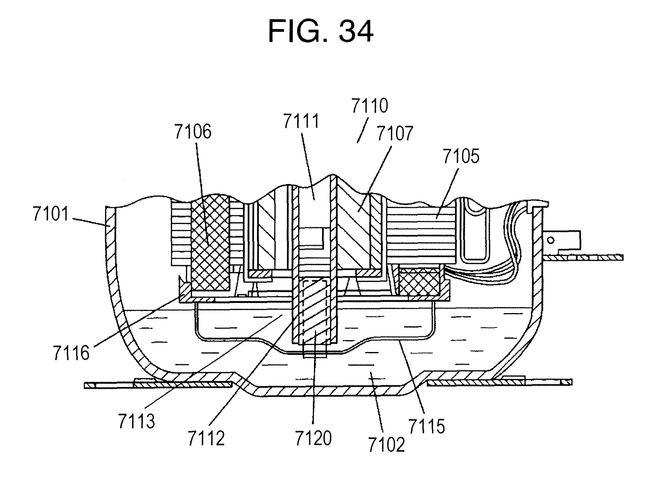

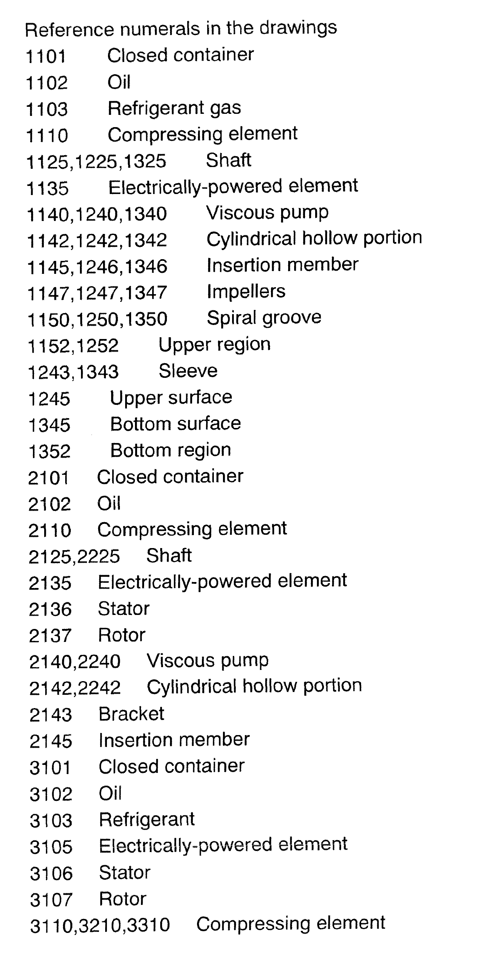

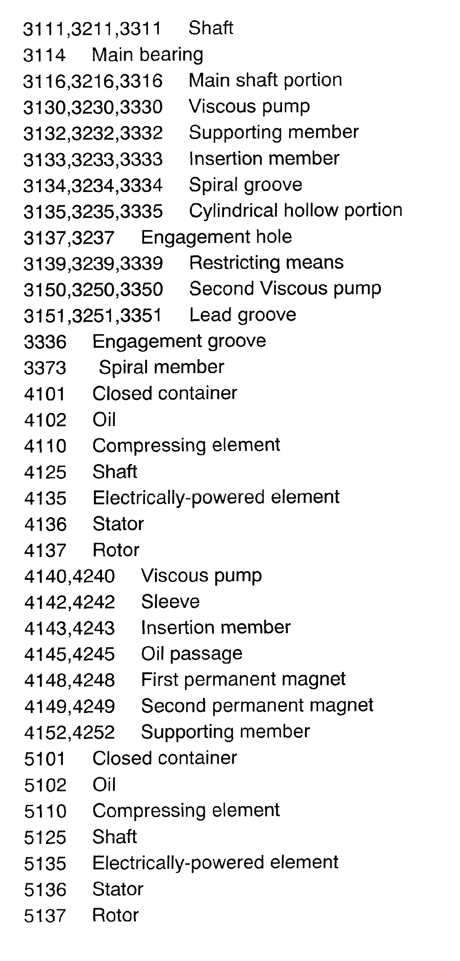

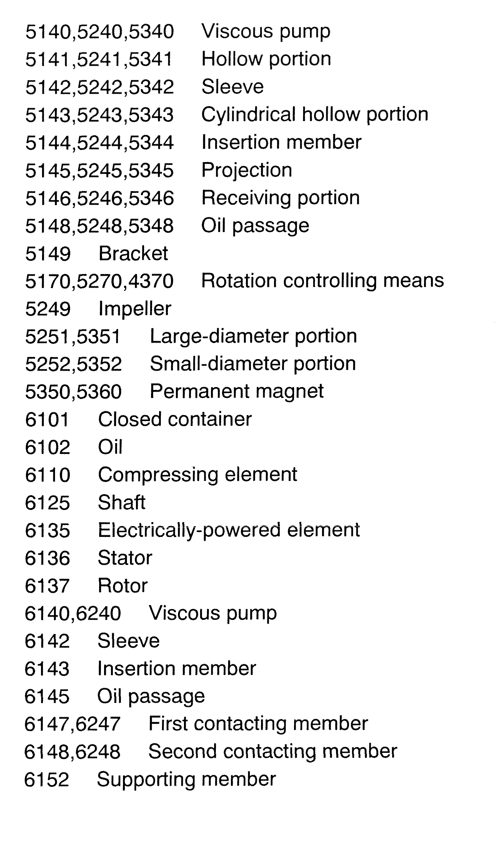

FIG. 34 is a cross-sectional view illustrating a main part of a conventional compressor. In FIG. 34, oil 7102 is stored in the bottom area of closed container 7101. Electrically-powered element 7105 includes stator 7106 and rotor 7107 which contains permanent magnet. Rotor 7107 engages with hollow shaft 7111 of compressing element 7110, and sleeve 7112 which is soaked with oil 7102 at least at its lower end and rotates integrally with shaft 7111 is fixed to shaft 7111.

Substantially U-shaped bracket 7115 made from elastic material has a concave center portion and its both ends are fixed to shroud 7116 secured to stator 7106. Insertion member 7120 made from plastic material and inserted into sleeve 7112 has a spiral groove on its outer surface to provide oil passage between insertion member 7120 and sleeve 7112. The lower end of insertion member 7120 is fixed to the center portion of bracket 7115.

The operation of the conventional compressor having the above structure is now described.

When electrically-powered element 7105 is energized, rotor 7107 rotates. Shaft 7111 revolves with the rotation of rotor 7107, and compressing element 7110 carries out predetermined compressing operations. Oil 7102 rises through the oil passage formed between the spiral groove formed on the outer surface of insertion member 7120 and sleeve 7112 in accordance with the revolution of sleeve 7112 while rotating and being pulled by the inner surface of the sleeve due to viscosity, thereby drawing up oil 7102 toward the upper hollow region of shaft 7111.

### Disclosure of the Invention

A compressor has a closed container which stores oil and accommodates a compressing element for compressing refrigerant and an electrically-powered element for driving the compressing element, wherein: the electrically-powered element includes a stator and a rotor; and the compressing element includes a shaft which extends in a vertical direction and rotates, and a viscous pump which is formed inside the shaft and communicates with the oil, the viscous pump having a cylindrical hollow portion formed in the shaft, an insertion member coaxially and rotatably inserted into the cylindrical hollow portion, a spiral groove formed between the inner surface of the cylindrical hollow portion and the outer surface of the insertion member along a direction where the oil rises, and prevention means for preventing rotation of the insertion member.

### Brief Description of the Drawings

FIG. 1 is a cross-sectional view illustrating a main part of a compressor in a first embodiment of the present invention.
FIG. 2 is a perspective view of a lower part of a shaft in the first embodiment of the invention.
FIG. 3 is a cross-sectional view illustrating the main part of the compressor in a driving condition immediately after start-up in the first embodiment of the invention.
FIG. 4 is a cross-sectional view illustrating a main part of a compressor in a second embodiment of the invention.
FIG. 5 is a perspective view of a lower part of a shaft in the second embodiment of the invention.
FIG. 6 is a cross-sectional enlarged view illustrating a sleeve in the second embodiment of the invention.
FIG. 7 is a cross-sectional view illustrating a main part of a compressor in a third embodiment of the invention.
FIG. 8 is a perspective view of a lower part of a shaft in the third embodiment of the invention.
FIG. 9 is a cross-sectional enlarged view illustrating a sleeve in the third embodiment of the invention.
FIG. 10 is a cross-sectional view illustrating a compressor in a fourth embodiment of the invention.
FIG. 11 is a cross-sectional view illustrating a main part of the compressor in the fourth embodiment of the invention.
FIG. 12 is a perspective view illustrating the main part of the compressor in the fourth embodiment of the invention.
FIG. 13 is a cross-sectional view illustrating a main part of a compressor in a fifth embodiment of the invention.
FIG. 14 is a cross-sectional view illustrating a main part of a compressor in a sixth embodiment of the invention.
FIG. 15 is a cross-sectional view of a compressor in a seventh embodiment of the invention.
FIG. 16 is a cross-sectional view illustrating a main part of the compressor in the seventh embodiment of the invention.
FIG. 17 is a cross-sectional view illustrating a main part of a compressor in an eighth embodiment of the invention.
FIG. 18 is a main part assembly view of the compressor in the eighth embodiment of the invention.
FIG. 19 is a cross-sectional view illustrating a compressor in a ninth embodiment of the invention.
FIG. 20 is a cross-sectional view illustrating a main part of the compressor in the ninth embodiment of the invention.
FIG. 21 is a cross-sectional view illustrating a compressor in a tenth embodiment of the invention.
FIG. 22 is a cross-sectional view illustrating a main part of the compressor in the tenth embodiment of the invention.
FIG. 23 is a cross-sectional view illustrating a compressor in an eleventh embodiment of the invention.
FIG. 24 is a cross-sectional view illustrating a main part of the compressor in the eleventh embodiment of the invention.
FIG. 25 is an enlarged view illustrating a main part of an insertion member in the eleventh embodiment of the invention.
FIG. 26 is a cross-sectional view illustrating a compressor in a twelfth embodiment of the invention.
FIG. 27 is a cross-sectional view illustrating a main part of the compressor in the twelfth embodiment of the invention.
FIG. 28 is a cross-sectional view illustrating a compressor in a thirteenth embodiment of the invention.
FIG. 29 is a cross-sectional view illustrating a main part of the compressor in the thirteenth embodiment of the invention.
FIG. 30 is a cross-sectional view illustrating a compressor in a fourteenth embodiment of the invention.
FIG. 31 is a cross-sectional view illustrating a main part of the compressor in the fourteenth embodiment of the invention.
FIG. 32 is a cross-sectional view illustrating a main part of a viscous pump in the fourteenth embodiment of the invention.
FIG. 33 is a cross-sectional view illustrating a main part of a compressor in a fifteenth embodiment of the invention.
FIG. 34 is a cross-sectional view illustrating a main part of a conventional compressor.

### Detailed Description of the Preferred Embodiments

According to the description of the structure of the above-described conventional compressor, a hollow opening is provided in an upper area of the viscous pump, and there is a large space for storing transferred oil. Especially, the process for further raising oil drawn by the viscous pump immediately after the start-up requires sufficient time for storing oil until the hollow opening is substantially filled with oil.

As a result, oil is transferred upward at lower speed and thus oil supply to sliding areas becomes unstable. This causes sliding components to contact each other while sliding, forming scratches and abrasion therebetween. These damages lead to a locked condition of the compressing element.

In order to solve the above problem, an object of the present invention is to provide a highly reliable compressor which transfers oil to each sliding area at high speed and has reliable and stable oil transfer capability even at the time of low-speed driving.

For achieving the above object, a compressor of the present invention includes a viscous pump which opens to oil stored in a lower region of a closed container and a second viscous pump connected to an upper region of the former viscous pump, both the viscous pumps being attached to a main shaft portion of a shaft. Since most area of an oil passage in the main shaft portion is occupied by the pumps, the space for storing oil and refrigerant is reduced. Consequently, the oil transfer speed increases. Additionally, oil receives not only centrifugal force which decreases at the time of low-speed revolution but also upward pressure while being pulled due to viscosity within the passage.

The compressor provided according to the present invention, which includes a viscous pump and a second viscous pump disposed above the viscous pump, is a highly reliable compressor which transfers oil at high speed and has stable oil transfer capability even at the time of low-speed driving.

First through third embodiments of the present invention is hereinafter described with reference to the drawings. The present invention is not limited to those embodiments.

### (Embodiment 1)

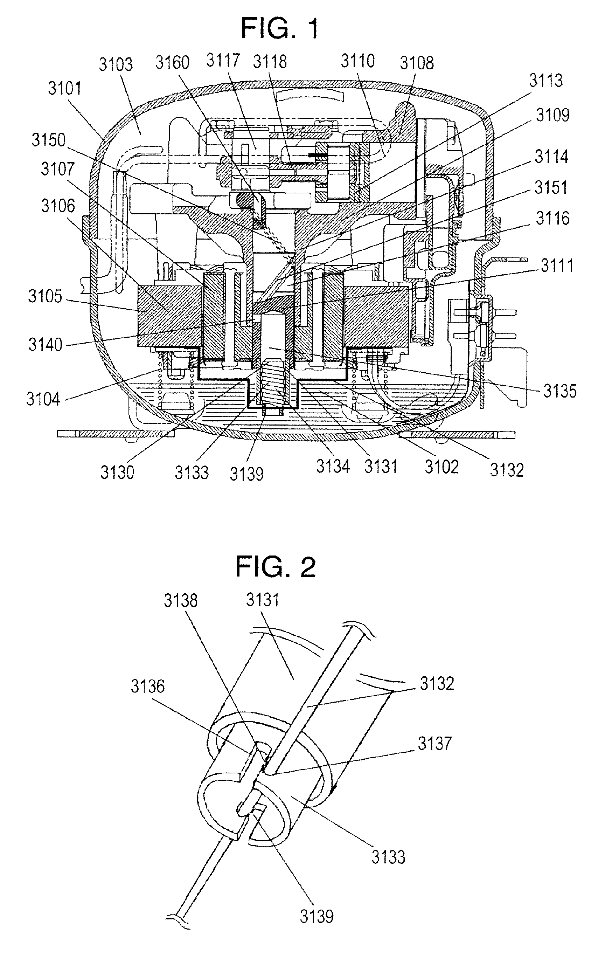

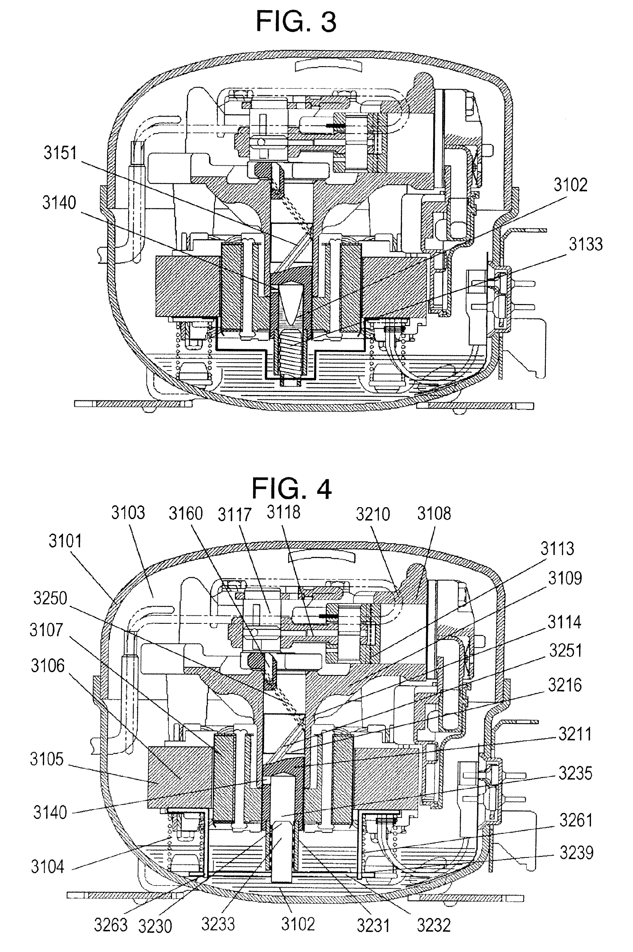

FIG. 1 is a cross-sectional view illustrating a main part of a compressor in the first embodiment of the invention, FIG. 2 is a perspective view of a lower part of a shaft in the first embodiment, and FIG. 3 is a cross-sectional view illustrating the main part of the compressor in a driving condition immediately after start-up in the first embodiment.

In FIGS. 1, 2 and 3, oil 3102 is stored in closed container 3101 which is charged with refrigerant 3103.

Compressing element 3110 includes: block 3109 which forms cylinder 3108; piston 3113 reciprocatively inserted into cylinder 3108; shaft 3111 having main shaft portion 3116 supported by main bearing 3114 of block 3109 and eccentric portion 3117; and connecting rod 3118 for connecting eccentric portion 3117 and piston 3113. Compressing element 3110 forms a reciprocating compressing mechanism.

Electrically-powered element 105 is fixed below block 3109. Electrically-powered element 105 includes stator 3106 connected to an inverter driving circuit (not shown) and rotor 3107 which contains permanent magnet (not shown) and is fixed to main shaft portion 3116. Electrically-powered element 105 is an electrically-powered element 105 for driving the inverter, and is driven at a plurality of driving frequencies including those at least in a range from 600 to 1,200 r/min. by the inverter driving circuit.

Springs 3104 elastically support compressing element 3110 via stator 3106 so that compressing element 3110 is elastically held on closed container 3101.

Main shaft portion 3116 of shaft 3111 has viscous pump 3130 soaked with oil 3102 and second viscous pump 3150 connected with viscous pump 3130 through communicating hole 3140. Second viscous pump 3150 is disposed above viscous pump 3130.

Next, the structures of viscous pump 3130 and second viscous pump 3150 connected with each other are described in detail.

Viscous pump 3130 includes: cylindrical hollow portion 3135 formed in main shaft portion 3116; sleeve 3131 secured to the lower region of cylindrical hollow portion 3135; insertion member 3133 coaxially inserted into cylindrical hollow portion 3135 and sleeve 3131; and supporting member 3132. Supporting member 3132 has restricting means 3139 for restricting floating of insertion member 3133 in the rotational and vertical directions.

The upper end of cylindrical hollow portion 3135 reaches the lower region of main bearing 3114.

Sleeve 3131 is substantially cylindrical and cap-shaped, whose top and bottom are open. Sleeve 3131 is made from iron plate press material which offers comparatively high accuracy, but may be formed from leaf spring steel.

Thread-shaped spiral groove 3134 is formed on the outer surface of insertion member 3133 to provide a spiral oil passage between spiral groove 3134 and sleeve 3131, through which passage oil 3102 is allowed to flow. Insertion member 3133 has refrigerant-resistance and oil-resistance properties, and is made from plastic material having lower thermal conductivity than the metal material which forms shaft 3111, such as PPS, PBT, and PEEK.

Supporting member 3132 is substantially U-shaped and made from elastic material such as iron spring wire. Both ends of supporting member 3132 are fixed to the lower position of stator 3106. The center portion of supporting member 3132 engages with engagement holes 3137 through notches 3136 provided at the lower end of insertion member 3133. Notches 3136 are disposed before engagement holes 3137 in the advancing direction of main bearing 3114 and joined with engagement holes 3137. The length of joining portions 3138 of engagement holes 3137, i.e. , the length of the openings in contact with notches 3136 is smaller than the outside diameter of supporting member 3132.

Second viscous pump 3150 includes main shaft portion 3116, lead groove 3151 engraved on the outer surface of main shaft portion 3116, and main bearing 3114.

Main bearing 3114 is secured to block 3109, or formed integrally with block 3109 to be secured thereto. Lead groove 3151 having a trapezoidal or substantially semicircular cross section is formed on the outer surface of main shaft portion 3116, whereby a spiral oil passage through which oil flows is provided between main bearing 3114 and lead groove 3151.

The upper end of lead groove 3151 communicates with eccentric communicating portion 3160 positioned within eccentric portion 3117.

The operation and action of the compressor having the above structure are now described.

When stator 3106 is energized by the inverter driving circuit, rotor 3107 rotates with shaft 3111. The eccentric motion of eccentric portion 3117 thus caused reciprocates piston 3113 within cylinder 3108 via connecting rod 3118, thereby carrying out predetermined compressing actions for taking in and compressing refrigerant 3103.

In accordance with the rotation of main shaft portion 3116 of shaft 3111, oil 3102 rises through the oil passage formed between the outer surface of insertion member 3133 and the inner surface of sleeve 3131 included in viscous pump 3130 while being pulled by the rotation of sleeve 3131. Oil 3102 then passes through communicating hole 3140 and reaches the starting point of lead groove 3151. Subsequently, oil 7302 further rises through the oil passage formed between lead groove 3151 provided on the outer surface of main shaft portion 3116 of second viscous pump 3150 and the inner surface of main bearing 3114 while being pulled by the rotation of main shaft portion 3116. Finally, oil 3102 is transferred to eccentric portion 3117, connecting rod 3118 and other components through eccentric communicating portion 3160.

In this embodiment as described above, most area of the oil passage of main shaft portion 3116 is occupied by viscous pump 3130 and second viscous pump 3150 and the space for storing refrigerant 3103 and oil 3102 is small. Therefore, oil 7302 is transferred to each sliding area at high speed without decreasing the speed. Moreover, oil 3102 receives not only centrifugal force which decreases at the time of low-speed revolution but also upward pressure while oil 3102 is being pulled within the oil passage due to viscosity, thereby drawing up oil 3102 in a reliable and stable manner even at the time of low-speed revolution.

Additionally, when oil 3102 in which refrigerant 3103 dissolves is heated by compressing element 3110, electrically-powered element 3105 and other components and refrigerant 3103 is thus vaporized within the oil passage, the refrigerant gas is transferred together with oil 3102 owing to the high oil-transfer performance of viscous pump 3130 and second viscous pump 3150 connected with each other without hindering transfer of oil 3102. As a result, oil 3102 can be transferred to each sliding area at high speed immediately after start-up even at the time of low-speed revolution such as 600 r/min., thereby realizing stable oil transfer capability.

Accordingly, damages such as flaws and abrasion which may lead to excessive wear or a locked condition of compressing element 3110 are not caused when the sliding components contact each other.

In this embodiment, rotor 3107 is fitted to main shaft portion 3116 by shrinkage fitting or press fitting. However, since the inside diameter of cylindrical hollow portion 3135 alters at the time of attachment of rotor 3107, the dimension of the space between cylindrical hollow portion 3135 and insertion member 3133 in the radial direction is difficult to control. Thus, viscous pump 3130 is not provided in the region where rotor 3107 is fitted to main shaft portion 3116. The length of that region, i.e., the length from the top surface of insertion member 3133 to communicating hole 3140 is in a range from about 10mm to about 20mm, which is substantially equivalent to the fitting length of rotor 3107.

However, according to our finding from experiments in this embodiment, a known parabolic free surface is produced on the upper surface of oil 3102 within the cylindrical hollow portion due to centrifugal force immediately after start-up, and oil 3102 having reached the upper end surface of insertion member 3133 instantly comes to communicating hole 3140 as illustrated in FIG. 3. Thus, the oil transfer speed is scarcely affected if the length of the region where the pump is not provided is from about 10mm to about 20mm.

Since the oil transfer speed is considerably high, oil 3102 within cylindrical hollow portion 3135 rapidly flows into lead groove 3151 immediately after start-up, causing negative pressure inside cylindrical hollow portion 3135. As a result, such a phenomenon that insertion member 3133 is sucked toward the upper region of cylindrical hollow portion 3135 is caused in very few cases. Additionally, reaction force against the force for moving oil upward caused by viscosity is always applied to insertion member 3133 in the downward direction during continuous operation.

However, floating of insertion member 3133 in the vertical direction is restricted by the engagement between the center portion of supporting member 3132 and engagement holes 3137 of insertion member 3133. Thus, the structure of viscous pump 3130 in which oil 3102 is drawn up through the space between cylindrical hollow portion 3135 and insertion member 3133 due to viscosity can be maintained both at the start-up and during continuous driving.

Since the clearance between sleeve 3131 and insertion member 3133 is maintained by the oil pressure generated within spiral groove 3134, the possibility of sliding abrasion and fixation between sleeve 3131 and insertion member 3133 is extremely low. Additionally, by determining the difference between the inside diameter of engagement holes 3137 and the outside diameter of supporting member 3132 in a range from several hundred µm to 1mm instead of completely fixing supporting member 3132 to engagement holes 3137, the clearance between sleeve 3131 and insertion member 3133 can be similarly maintained.

Joining portions 3138 of engagement holes 3137 are open in the advancing direction of main shaft portion 3116, and a force in the rotational direction is applied on the side on which engagement holes 3137 are closed even at the time of high-speed revolution at a driving frequency in a range from 4,200 to 4,800 r/min., for example. However, this force is scarcely applied on the side on which joining portions 3138 are open. In this structure, insertion member 3133, which does not rotate by the restriction of supporting member 3132, is prevented from coming off from the predetermined position even at the time of high-speed driving.

The length of the regions of joining portions 3138 which are open to notches 3136 is smaller than the outside diameter of supporting member 3132. Thus, supporting member 3132 does not easily come off from engagement holes 3137 once it is inserted into engagement holes 3137, even if uncertain events such as vibrations occur during assembly at the line or transportation.

The compressor in this embodiment is inexpensive, as it does not require additional components for restricting rotation and vertically floating of insertion member 3133.

Since a reliable and sufficient amount of oil 3102 is transferred even at the time of low-speed revolution, it is possible to reduce heat generated from main shaft portion 3116, electrically-powered element 3105 and other components and thus prevent temperature increase of oil 3102. Accordingly, while R600a as isobutane is more soluble in oil 3102 than R134a, vaporization of R600a and resultant accumulation of the gas do not occur within the oil passage, thereby preventing generation of obstruction for the transfer of oil 3102 such as a gas choke phenomenon.

Viscous pump 3130 and second viscous pump 3150 are assembled integrally with electrically-powered element 3105 and compressing element 3110, inserted into closed container 3101, and finally supported with elasticity by springs 3104 inside closed container 3101. Thus, constituting components for viscous pump 3130 and second viscous pump 3150 are not required to be provided in closed container 3101. Accordingly, the compressor in this embodiment is easily assembled and has high productivity, and requires only the minimum number of components and thus realizes cost reduction in manufacture.

In this embodiment, sleeve 3131 is fastened within cylindrical hollow portion 3135. However, insertion member 3133 may be directly inserted into cylindrical hollow portion 3135 formed by the processed main shaft portion to provide a viscous pump instead of using sleeve 3131, if the accuracy within 500µm can be secured for the clearance between the outermost surface of insertion member 3133 and the inside surface of cylindrical hollow portion 3135. While the number of components in this structure is different from that of the above-described embodiment, both cases are basically identical in the aspects of operation, action and advantages.

### (Embodiment 2)

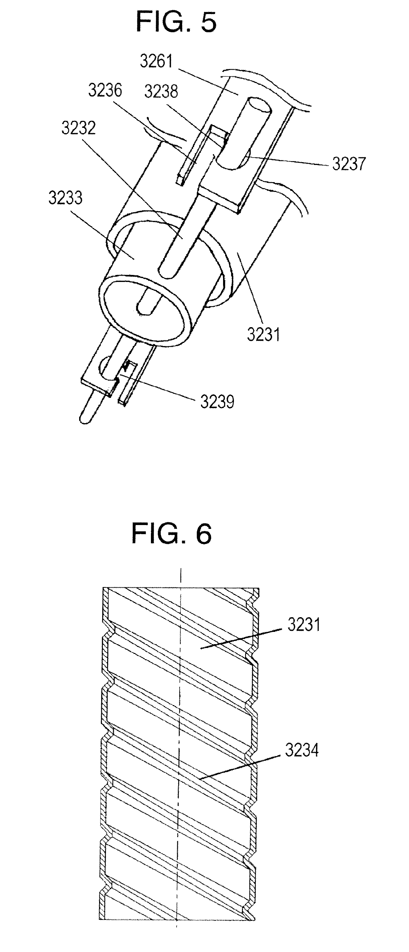

FIG. 4 is a cross-sectional view illustrating a main part of a compressor in a second embodiment of the invention, FIG. 5 is a perspective view of a lower part of a shaft in the second embodiment, and FIG. 6 is a cross-sectional enlarged view illustrating a sleeve in the second embodiment.

The second embodiment is herein described with reference to FIGS. 4, 5 and 6. Similar numbers are given to the structures similar to those of the first embodiment, and detailed description of those is omitted.

Main shaft portion 3216 of shaft 3211 included in compressing element 3210 has viscous pump 3230 soaked with oil 3102 and second viscous pump 3150 connected with viscous pump 3230 through communicating hole 3140. Second viscous pump 3150 is disposed above viscous pump 3230.

Next, the structures of viscous pump 3230 and second viscous pump 3150 connected with each other are described in detail.

Viscous pump 3230 is coaxially inserted into cylindrical hollow portion 3235 formed in main shaft portion 3216 and sleeve 3231 secured to the lower region of cylindrical hollow portion 3235. Viscous pump 3230 includes insertion member 3233 having two supporting members 3232 which extend from the lower end of insertion member 3233 in the almost horizontal direction, and restricting means 339 having free joints 3261 which is combined with supporting members 3232 such that free joints 3261 and supporting members 3232 can freely rotate so as to restrict floating of insertion member 3233.

The upper end of cylindrical hollow portion 3235 reaches the lower part of main bearing 3114.

Thread-shaped spiral groove 3234 is formed on the inner surface of sleeve 3231 to provide a spiral oil passage between spiral groove 3234 and insertion member 3233, through which passage oil 3102 is allowed to flow.

Insertion member 3233 has refrigerant-resistance and oil-resistance properties, and is made from plastic material or other material having lower thermal conductivity than metal material. Supporting members 3232 made from metal wire penetrate through the lower end of insertion member 3233 to be fixed thereto.

Substantially L-shaped free joint 3261 is fixed to the lower part of stator 3106 at one end, and has notch 3236 and engagement hole 3237 at the other end. The end of supporting member 3232 which is formed at the lower end of insertion member 3233 is inserted through notche 3236 into engagement hole 3237, thereby combining supporting member 3232 and free joint 3261 such that both can freely rotate. This structure restricts floating of insertion member 3233 in the rotational and vertical directions.

Notches 3236 are disposed before engagement holes 3237 in the advancing direction of main shaft portion 3216 and joined with engagement holes 3237. The length of joining portions 3238 of engagement holes 3237, i.e., the length of the openings in contact with notches 3236 is smaller than the outside diameter of supporting members 3232.

Second viscous pump 3250 include main shaft portion 3216, lead groove 3251 engraved on the outer surface of main shaft portion 3216, and main bearing 3114.

Lead groove 3251 having a trapezoidal or substantially semicircular cross section is formed on the outer surface of main shaft portion 3216, whereby a spiral oil passage through which oil 3102 flows is provided between main bearing 3114 and lead groove 3251.

The operation and action of the compressor having the above structure are now described.

When stator 3106 is energized by the inverter driving circuit, main shaft portion 3216 of shaft 3211 rotates. In accordance with this rotation, oil 3102 rises through the oil passage formed between the inner surface of sleeve 3231 and the outer surface of insertion member 3233 included in viscous pump 3230 while being pulled by the rotation of sleeve 3231. Oil 3102 then passes through communicating hole 3140 and reaches the starting point of lead groove 3251.

Subsequently, oil 3102 further rises through the oil passage formed between lead groove 3251 provided on the outer surface of main shaft portion 3216 and the inner surface of main bearing 3114 included in second viscous pump 3250 while being pulled by the rotation of main shaft portion 3216.

In the embodiment as described above, oil 3102 is transferred to each sliding area at high speed by the similar mechanism as in the first embodiment. Moreover, the stable oil transfer capability can be maintained even at the time of low-speed revolution such as 600 r/min. Accordingly, damages such as flaws and abrasion which may lead to excessive wear or a locked condition of compressing element 3210 are not caused when the sliding components contact each other, and thus a highly reliable compressor can be provided.

Moment generated through the rotation applies load, and the load applied to a certain position decreases as the distance from that position to the rotational shaft center of shaft 3211 increases. Since the distance between the rotational shaft center and combining portion 3263 for combining supporting member 3232 and free joint 3261 included in restricting means 3239 is large in this embodiment, the load applied to combining portions 3263 is decreased, thereby considerably reducing the possibility of breaking of combining portions 3263.

In this embodiment, spiral groove 3234 is formed on the inner surface of sleeve 3231 to enlarge the area of inner surface of the rotational body in contact with oil 3102 by adding the surface area of the concaves of spiral groove 3234. This structure causes large viscous resistance, thereby enhancing oil transfer capability.

Furthermore, centrifugal force generated through the rotation of main shaft portion 3216 is applied to oil 3102 existing within the oil passage formed between the inner surface of sleeve 3231 and the outside surface of insertion member 3233 and oil 3102 rises while rotating and inclining toward the farthermost surface from the rotational shaft center in the oil passage. Since there is no clearance in the oil passage to which the centrifugal force is most applied in this embodiment, oil 3102 does not fall to flow out and thus the amount of oil 3102 which falls to flow out can be controlled. Accordingly, the compressor in this embodiment has considerably higher transfer capability of oil 3102 than the example in which the spiral groove is formed on insertion member 3233.

### (Embodiment 3)

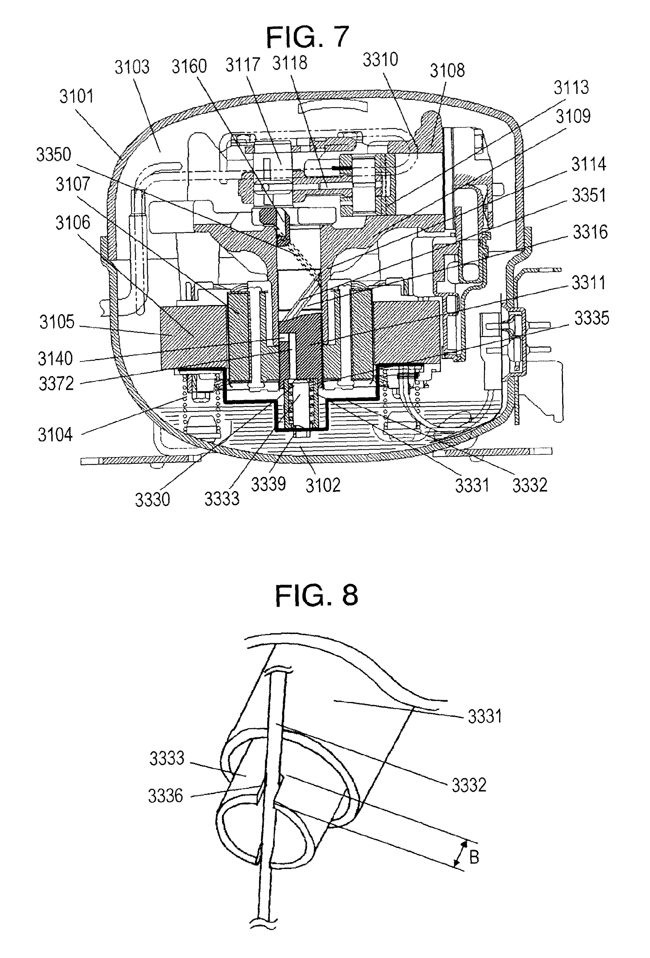

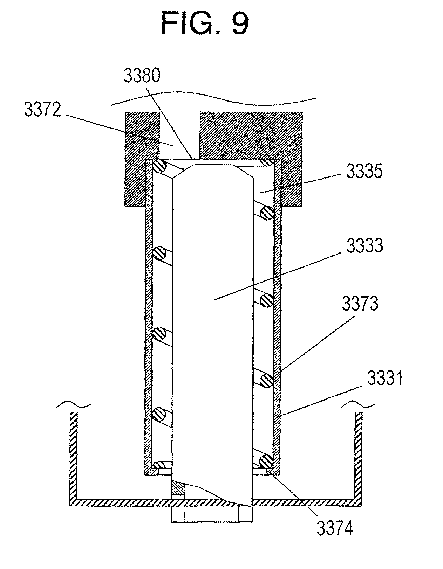

FIG. 7 is a cross-sectional view illustrating a main part of a compressor in a third embodiment of the invention, FIG. 8 is a perspective view of a lower part of a shaft in the third embodiment, and FIG. 9 is a cross-sectional enlarged view illustrating a sleeve in the third embodiment.

The third embodiment is herein described with reference to FIGS. 7, 8 and 9. Similar numbers are given to the structures similar to those of the first embodiment, and detailed description of those is omitted.

Main shaft portion 3316 of shaft 3311 included in compressing element 3310 has viscous pump 3330 soaked with oil 3102 and second viscous pump 3350 connected with viscous pump 3330 through communicating hole 3140. Second viscous pump 3150 is disposed above viscous pump 3330.

Next, the structures of viscous pump 3330 and second viscous pump 3350 connected with each other are described in detail.

Viscous pump 3330 includes: cylindrical hollow portion 3335 formed in main shaft portion 3316; sleeve 3331 secured to cylindrical hollow portion 3335; spiral member 3373 as a coil spring fixed to the inner surface of sleeve 3331; insertion member 3333 coaxially inserted into cylindrical hollow portion 3335 and sleeve 3331; and restricting means 3339 having supporting member 3332 for restricting floating of insertion member 3333.

Supporting member 3332 is substantially U-shaped and made from elastic material such as iron spring wire. Both ends of supporting member 3332 are fixed to the lower region of stator 3106. The center portion of supporting member 3332 engages with engagement grooves 3336 provided at the lower end of insertion member 3333 to restrict floating of insertion member 3333 in the rotational and vertical directions.

Eccentric passage 3372 formed above cylindrical hollow portion 3335 has a smaller inside surface diameter than the inside diameter of sleeve 3331, and is off-centered from the rotational shaft center toward the side where communicating hole 3140 is provided. The floating of insertion member 3333 in the upward direction is restricted by contacting with upper bottom 3380 of cylindrical hollow portion 3335. The clearance between the upper surface of insertion member 3333 and upper bottom 3380 of cylindrical hollow portion 3335 is so determined as to be smaller than a height (B) of engagement groove 3336 in the longitudinal direction so as to prevent separation of insertion member 3333 from supporting member 3332 when insertion member 3333 rises.

The upper end of eccentric passage 3372 reaches the lower part of main bearing 3114, where eccentric passage 3372 communicates with communicating hole 3140.

An oil passage is formed between spiral member 3373 as the coil spring fixed to the inner surface of sleeve 3331 and insertion member 3333, through which passage oil 3102 is allowed to flow.

Substantially cylindrical sleeve 3331 has a shape of a cap whose top and bottom are open. Sleeve 3331 has substantially L-shaped spring holder 3374 at its lower region. Sleeve 3331 is made from iron plate press material which can be processed with relatively high accuracy in this embodiment, but may be made from leaf spring steel.

The length of the coil spring of spiral member 3373 is larger than the total length of the inner surface of sleeve 3331 from which the length of the spring holder 3374 in the axial direction is subtracted. As a result, spiral member 3373 is compressed between upper bottom 3380 of cylindrical hollow portion 3335 and spring holder 3374 and fixed to the inner surface of sleeve 3331.

Spiral member 3373 is made from oil temper wire for springs (SWOV) in this embodiment, but may be made from other material including iron steel such as piano wire (SWP) and spring steel (SUP), non-iron metal such as aluminum, plastic material (PC, PA) whose thermal deformation temperature is 100°C or higher and which has high formability, and other material having oil transfer capability of the spiral groove.

Second viscous pump 3350 includes main shaft portion 3316, lead groove 3351 engraved on the outer surface of main shaft portion 3316, and main bearing 3114.

Lead groove 3351 having a trapezoidal or substantially semicircular cross section is formed on the outer surface of main shaft portion 3316, whereby a spiral oil passage through which oil 3102 flows is provided between main bearing 3114 and lead groove 3351.

The operation and action of the compressor having the above structure are now described.

When stator 3106 is energized by the inverter driving circuit, main shaft portion 3316 of shaft 3311 rotates. In accordance with this rotation, oil 3102 rises through the oil passage formed between spiral member 3373 and the outer surface of insertion member 3333 included in viscous pump 3330 while being pulled by the rotation of sleeve 3331. Oil 3102 then passes through communicating hole 3140 and reaches the starting point of lead groove 3351.

Subsequently, oil 3102 further rises through the oil passage formed between lead groove 3351 and the inner surface of main bearing 3114 included in second viscous pump 3350 while being pulled by the rotation of main shaft portion 3116.

In the embodiment as described above, oil is transferred to each sliding area at high speed by the similar mechanism as in the first embodiment. Moreover, the stable oil transfer capability can be maintained even at the time of low-speed revolution such as 600 r/min. Accordingly, damages such as flaws and abrasion which may lead to excessive wear or a locked condition of compressing element 3310 are not caused when the sliding components contact each other, and thus a highly reliable compressor can be provided.

In assembly, the position of insertion member 3333 within cylindrical hollow portion 3335 in the vertical direction can be determined by aligning the upper surface of insertion member 3333 with upper bottom 3380 of cylindrical hollow portion 3335. Supporting member 3332 can be attached to insertion member 3333 by bringing supporting member 3332 into engagement with engagement grooves 3336 provided at the lower end of insertion member 3333. Thus, the assembly is facilitated.

In this embodiment, viscous pump 3330 which uses the shape of the coil spring itself as spiral member 3373 provided on the inner surface of sleeve 3331 can be far more easily formed than the structure in which a spiral groove is directly engraved on the inner surface of sleeve 3331.

From the viewpoint of energy saving, the amount of oil transfer can be appropriately controlled by replacing the coil spring with the one having a different wire diameter, wire cross-sectional shape, number of winding etc., in accordance with the driving frequency required by the system side such as household refrigerators and air conditioners. Thus, the compressor of this embodiment is highly flexible and capable of meeting a wide variety of demands.

Attachment of sleeve 3331 to the lower end of main shaft portion 3316 is completed by forcedly inserting sleeve 3331, which has the coil spring of spiral member 3373 around its inner surface in advance, into cylindrical hollow portion 3335 formed coaxially with main shaft portion 3316. Also, formation of the spiral groove necessary for the upward transfer of oil 3102 is completed by compressing spiral member 3373 between upper bottom 3380 of cylindrical hollow portion 3335 and spring holder 3374 and securing spiral member 3373 to the inner surface of sleeve 3331.

Thus, the assembly is extremely practical and easy, thereby enhancing productivity.

In the invention as described above, since most area of the oil passage of the main shaft portion is occupied by the pumps, the space for storing oil and refrigerant is small and oil is transferred at high speed. Also, not only centrifugal force which decreases at the time of low-speed revolution but also upward pressure is given to oil while oil is being pulled within the passage due to viscosity, thereby drawing up oil in a reliable and stable manner even at the time of low-speed revolution. Therefore, a highly reliable compressor having positive and stable oil transfer capability can be provided.

In addition to the above advantage, the highly reliable compressor provided according to the invention has high productivity and is manufactured at low cost.

Another advantage of the highly reliable compressor provided according to the invention is that the rotation, rising and falling of the insertion member can be securely prevented even at the start-up and during continuous driving, thereby realizing reliable and stable oil transfer capability.

Another advantage of the highly reliable compressor provided according to the invention is that rising and resultant separation of the insertion member from the restricting means and also abrasion and chipping of the insertion member due to the contact and collision between the inner surface of the cylindrical hollow portion and the outer surface of the insertion member are prevented, thereby realizing reliable and stable oil transfer capability.

Another advantage of the highly reliable compressor provided according to the invention is that the possibility of breaking of the restricting means is extremely low.

Another advantage of the highly reliable compressor provided according to the invention is that assembly of the compressor is facilitated.

Another advantage of the highly reliable compressor provided according to the invention is that multiplicatively large oil transfer capability can be obtained.

Another advantage of the highly reliable compressor provided according to the invention is that the compressor is highly flexible and has enhanced productivity.

Another advantage of the highly reliable compressor provided according to the invention is that power consumption is reduced since input to the compressor is decreased and oil supply is stabilized.

Another advantage of the highly reliable compressor provided according to the invention is that the compressor is easily assembled to achieve enhanced productivity and includes the viscous pumps.

Another advantage of the highly reliable compressor provided according to the invention is that generation of obstructions to the oil transfer such as gas choke phenomenon is prevented.

Another advantage of the highly reliable compressor provided according to the invention is that the compressor gives extremely little adverse effect on the global environment since the greenhouse effect coefficient of R600a employed is substantially zero and low-speed revolution reduces power consumption.

In the above-described conventional structure in which bracket 7115 supports insertion member 7120, insertion member 7120 comes to be fixed within sleeve 7112 if the dimensional precision is insufficient. This fixation is absorbed by the elasticity of the material of bracket 7115. However, if the fixation is extremely large, abrasion is generated between sleeve 7112 and insertion member 7120. The abrasion thus caused may decrease the pumping ability and generate abrasion powder which is circulated with oil toward the sliding area and caught between the sliding components and thus brings about a locked condition of the compressing element.

Additionally, as insertion member 7120 passes through rotor 7107 to be indirectly fixed to stator 7106, additional long components for insertion member 7120 with stator 7106 and suitable means and processes for fixing those components are required. Thus, the cost of the compressor is inevitably raised. It is thus an object of the invention to provide a highly reliable and inexpensive compressor.

Compressors in Fourth and fifth embodiments of the present invention are herein described with reference to the drawings.

### (Embodiment 4)

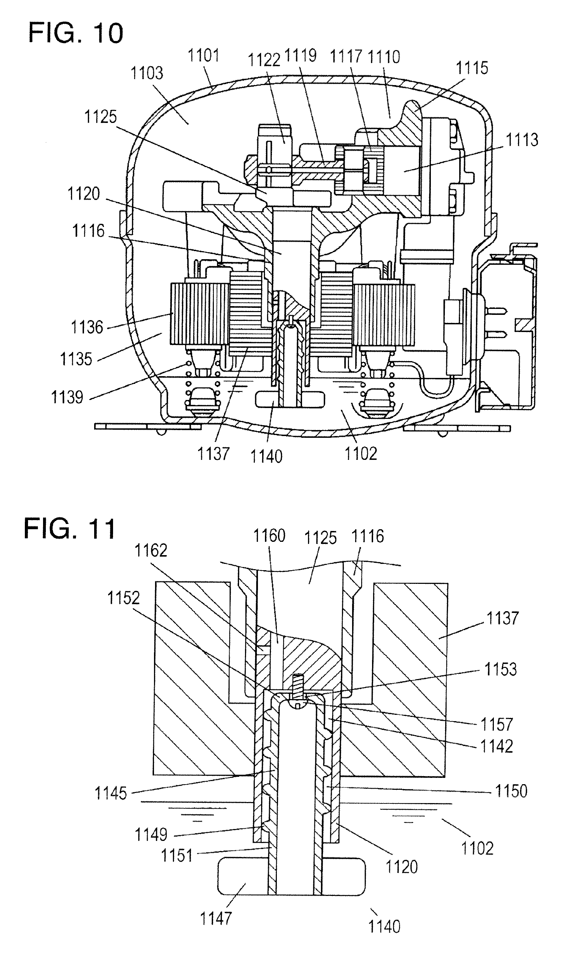

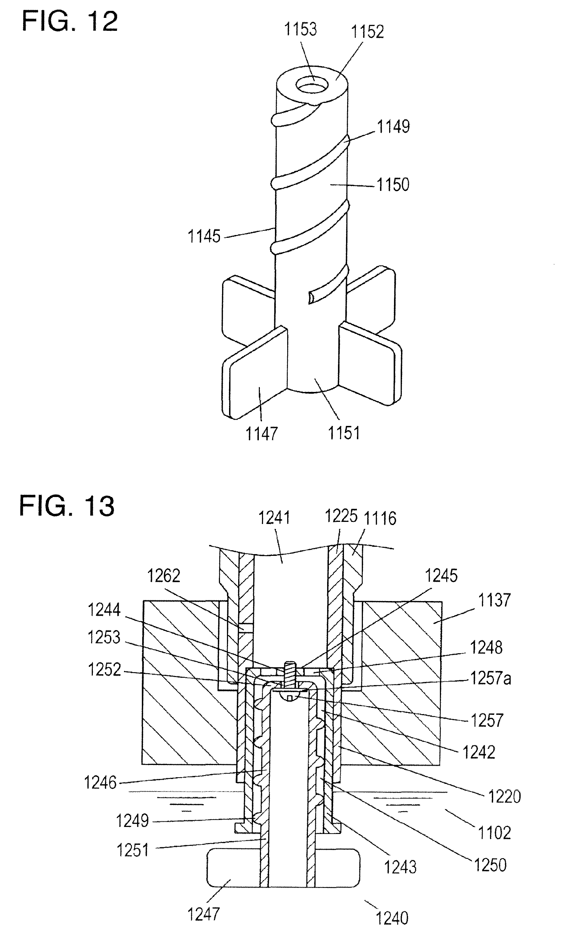

FIG. 10 is a cross-sectional view illustrating a compressor in the fourth embodiment of the invention, FIG. 11 is a cross-sectional view illustrating a main part of the compressor in the fourth embodiment, and FIG. 12 is a perspective view illustrating the main part of the compressor in the fourth embodiment.

In FIGs. 10 to 12, oil 1102 is stored in closed container 1101 which is filled with refrigerant gas 1103.

Compressing element 1110 includes: block 1115 which forms cylinder 1113; piston 1117 reciprocatively inserted into cylinder 1113; shaft 1125 having main shaft portion 1120 supported by main bearing 1116 of block 1115 and eccentric portion 1122; and connecting rod 1119 for connecting eccentric portion 1122 and piston 1117. Compressing element 1110 forms a reciprocating compressing mechanism.

Electrically-powered element 1135 is fixed below block 1115. Electrically-powered element 1135 includes stator 1136 connected to an inverter driving circuit (not shown) and rotor 1137 which contains permanent magnet and is fixed to main shaft portion 1120. Electrically-powered element 1135 thus forms an electrically-powered element for driving the inverter.

Springs 1139 elastically support compressing element 1110 via stator 1136 so that compressing element 1110 can be elastically supported on closed container 1101.

Main shaft portion 1120 of shaft 1125 has viscous pump 1140 soaked with oil 1102 at its lower end. Viscous pump 1140 includes: cylindrical hollow portion 1142 formed in the lower region of main shaft portion 1120; insertion member 1145 coaxially and rotatably inserted into cylindrical hollow portion 1142; and impellers 147 having a plurality of vanes which are formed integrally with insertion member 1145. A thread-shaped spiral projection 1149 is provided on the outer surface of insertion member 1145 , thereby forming a spiral groove 1150 through which oil 1102 flows between spiral projection 1149 and cylindrical hollow portion 1142.

Insertion member 1145 and impellers 1147 have component 1151 formed by a shaped plastic component having refrigerant-resistance and oil-resistance properties. Component 1151 is hollow and has upper region 1152 where penetration 1153 is opened. Screw 1157 inserted into penetration 1153 rotatably connects component 1151 to the ceiling of cylindrical hollow portion 1142.

Communicating hole 1160 extends upward from the ceiling of cylindrical hollow portion 1142 to connect cylindrical hollow portion 1142 with lateral hole 1162 which is open to a sliding area formed by the inner surface of bearing 1116 and the outer surface of main shaft portion 1120.

The operation of the compressor having the above structure is now described. When stator 1136 is energized by the inverter driving circuit, rotor 1137 rotates with shaft 1125. In accordance with this rotation, the eccentric motion of eccentric portion 1122 reciprocates piston 1117 within cylinder 1113 via connecting rod 1119, thereby carrying out predetermined actions for compressing gas which is taken in.

Cylindrical hollow portion 1142 rotates with the rotation of main shaft portion 1120 of shaft 1125. Insertion member 1145 then tries to rotate with the rotation of cylindrical hollow portion 1142, but in reality insertion member 1145 rotates at a number of revolution far smaller than that of cylindrical hollow portion 1142 since impellers 1147 receive strong viscous resistance in the rotational direction within oil 1102. Thus, there is a difference in the number of revolution between cylindrical hollow portion 1142 and insertion member 1145, which difference is near the number of revolution of shaft 1125. Consequently, oil 1102 rises within spiral groove 1150 while being pulled by the rotation of cylindrical hollow portion 1142. Then, oil 1102 further rises through communicating hole 1160 by the oil pressure thus generated, passes through lateral hole 1162, and reaches the sliding area formed by the inner surface of bearing 1116 and the outer surface of main shaft portion 1120 to lubricate that area.

At this stage, oil 1102 rises while rotating not only by the centrifugal force which decreases at low-speed revolution but by a pulling force generated by viscosity. Thus, oil can be drawn up in a stable manner even at the time of low-speed revolution such as 600 rpm.

According to this embodiment, since component 1151 is rotatably connected to the ceiling of cylindrical hollow portion 1142 only by screw 157 inserted into penetration 1153, lateral pressure due to fixation is scarcely applied between cylindrical hollow portion 1142 and insertion member 1145, and there is very few possibility of occurrence of sliding abrasion between cylindrical hollow portion 1142 and insertion member 1145. It is thus possible to prevent generation of abrasion powder which is circulated with oil toward the sliding area and caught between the sliding components and thus brings about a locked condition of the compressing element. Accordingly, the compressor provided according to this embodiment is highly reliable.

Furthermore, the rotation of insertion member 1145 is prevented while impellers 1147 are receiving strong viscous resistance in the rotational direction within oil 1102. Thus, indirect fixing of insertion member 1145 to stator 1136 as in the conventional example is not needed. Also, since the structure is extremely simple in which insertion member 1145 is rotatably connected to the ceiling of cylindrical hollow portion 1142 only by screw 1157 inserted into penetration 1153 of upper region 1152, only a small number of components and processes are required and cost-reduction of the compressor is attained.

### (Embodiment 5)

FIG. 13 is a cross-sectional view illustrating a main part of a compressor in a fifth embodiment according to the invention. The fifth embodiment is herein described with reference to FIG. 13. Similar numbers are given to the structures similar to those of the fourth embodiment, and detailed description of those is omitted.

Viscous pump 1240 soaked with oil 1102 is provided at the lower end of main shaft portion 1220 of shaft 1225.

Communicating hole 1241 is coaxially formed within main shaft portion 1220. Viscous pump 1240 includes: sleeve 1243 forcedly inserted into communicating hole 1241 and fixed thereto to form cylindrical hollow portion 1242; insertion member 1246 coaxially and rotatably inserted into sleeve 1243; and impellers 1247 having a plurality of vanes which are formed integrally with insertion member 1246.

Sleeve 1243 is substantially cylindrical and cap-shaped, and has upper surface 1245 where screw hole 1244 is provided. Upper surface 1245 has path hole 1248 through which oil 1102 flows.

Sleeve 1243 is made from iron plate press material which offers comparatively high accuracy and is an appropriate material through which insertion member 1246 slides, but may be formed from other suitable materials through which insertion member 1246 slides such as plastics and leaf spring steel.

A thread-shaped spiral projection 1249 is provided on the outer surface of insertion member 1246, thereby forming spiral groove 1250 through which oil 1102 flows between spiral projection 1249 and sleeve 1243.

Insertion member 1246 and impellers 1247 have component 1251 formed by a shaped plastic component having refrigerant-resistance and oil-resistance properties. Component 1251 is hollow and has upper region 1252 where penetration 1253 is provided. Screw 1257 inserted through penetration 1253 is screwed into screw hole 1244 via washer 1257a to rotatably connect component 1251 to upper surface 1245.

Washer 1257a is made from 4-fluorinated ethylene and controls the sliding with component 1251 in the thrust direction.

Communicating hole 1241 opens to a sliding area formed by the inner surface of bearing 1116 and the outer surface of main shaft portion 1220 to communicate with the sliding area through lateral hole 1262.

The operation of the compressor having the above structure is now described.

When stator 1136 is energized by the inverter driving circuit, rotor 1137 rotates with shaft 1225.

In accordance with the rotation of main shaft portion 1220 of shaft 1225, cylindrical hollow portion 1242 formed by sleeve 1243 rotates. Insertion member 1246 then tries to rotate with the rotation of cylindrical hollow portion 1242, but in reality insertion member 1246 rotates at a number of revolution far smaller than that of cylindrical hollow portion 1242 since impellers 1247 receive strong viscous resistance in the rotational direction within oil 1102. Thus, there is a difference in the number of revolution between cylindrical hollow portion 1242 and insertion member 1246, which difference is near the number of revolution of shaft 1225. Consequently, oil rises through spiral groove 1250 while being pulled by the rotation of cylindrical hollow portion 1242. Then, oil 1102 further rises through path hole 1248 in communicating hole 1241 by the oil pressure thus caused, passes through lateral hole 1262, and reaches the sliding area formed by the inner surface of bearing 1116 and the outer surface of main shaft portion 1220 to lubricate that area.

At this stage, oil 1102 rises while rotating not only by the centrifugal force which decreases at low-speed revolution but by a pulling force generated by viscosity. Thus, oil can be drawn up in a stable manner even at the time of low-speed revolution such as 600 rpm.

According to this embodiment, component 1251 is rotatably connected to upper surface 1245 via washer 1257a only by screw 1257 inserted through penetration 1253. Thus, lateral pressure due to fixation is scarcely applied between sleeve 1243 and insertion member 1246, and there is very few possibility of occurrence of sliding abrasion between sleeve 1243 and insertion member 1246. It is thus possible to prevent generation of abrasion powder which is circulated with oil and caught between the sliding components and thus brings about a locked condition of the compressing element. Accordingly, the compressor provided according to this embodiment is highly reliable.

A force in the downward direction as a reaction to a force for pushing up oil 1102 is applied to sleeve 1243. The downward force is given to the sliding surface as a load in the thrust direction. The sliding area exists at the position between upper surface 1245 of sleeve 1243 and washer 1257a in this embodiment, but extreme abrasion at that position is prevented by the self-lubrication ability of washer 1257a which is made from 4-fluorinated ethylene.

The rotation of insertion member 1246 is prevented while impellers 1247 are receiving strong viscous resistance in the rotational direction within oil 1102. Thus, indirect fixing of insertion member 1246 to stator 1136 as in the conventional example is not needed. Also, since the structure is extremely simple in which insertion member 1246 is rotatably connected to upper surface 1245 via washer 1257a only by screw 1257 inserted through penetration 1253 of upper region 1252, only a small number of components and processes are required and thus cost-reduction of the compressor can be attained.

In this embodiment, viscous pump 1240 is assembled in advance as an independent component by joining sleeve 1243 and component 1251 by screw 1257 inserted via washer 1257a. After rotor 1137 is forcedly fitted to shaft 1225, viscous pump 1240 as the independent component is forcedly fitted to communicating hole 1241 to complete the assembly. Thus, drastically practical and enhanced productivity can be attained.

### (Embodiment 6)

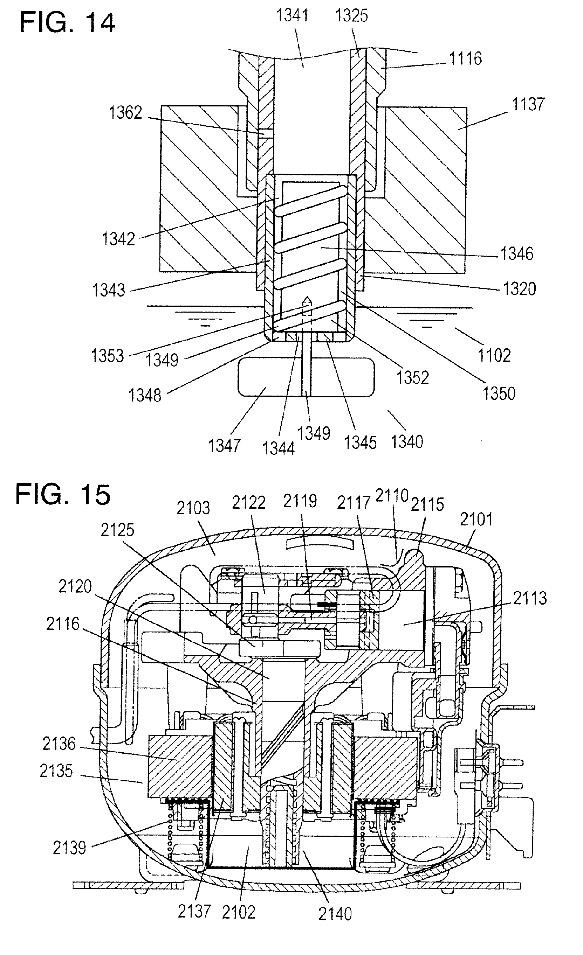

FIG. 14 is a cross-sectional view illustrating a main part of a compressor in a sixth embodiment according to the present invention. The sixth embodiment is herein described with reference to FIG. 14. Similar numbers are given to the structures similar to those of the fourth embodiment, and detailed description of those is omitted.

Viscous pump 1340 soaked with oil 1102 is provided at the lower end of main shaft portion 1320 of shaft 1325.

Communicating hole 1341 is coaxially formed within main shaft portion 1320. Viscous pump 1340 includes: sleeve 1343 forcedly inserted into communicating hole 1341 and fixed thereto to form cylindrical hollow portion 1342; insertion member 1346 coaxially and rotatably inserted into sleeve 1343; and impellers 1347 having a plurality of vanes which are formed separately from insertion member 1346.

Sleeve 1343 is substantially cylindrical and cap-shaped, and has bottom surface 1345 where rod hole 1344 is formed at its center. Bottom surface 1345 has path hole 1348 through which oil 1102 flows. Sleeve 1343 is made from iron plate press material which offers comparatively high accuracy and is an appropriate material through which insertion member 1336 slides, but may be formed from other suitable materials through which insertion member 1336 slides such as plastics and leaf spring steel.

Insertion member 1346 is formed by a shaped plastic component having refrigerant-resistance and oil-resistance properties and has thread-shaped spiral projection 1349 on its outer surface, thereby forming spiral groove 1350 through which oil 1102 flows between spiral projection 1349 and sleeve 1343. Bottom region 1352 has a small-diameter hole 1353.

In this embodiment, impellers 1347 are stamped out from thin iron plate, and rod 1349 made from steel wire which is resistance-welded to impellers 1347 is forcedly inserted through rod hole 1344 into small-diameter hole 1353 formed on bottom region 1352 to be fixed thereto. Communicating hole 1341 opens to a sliding area formed by the inner surface of bearing 1116 and the outer surface of main shaft portion 1320 through lateral hole 1362 to communicate with the sliding area.

The operation of the compressor having the above structure is now described. When stator 1136 is energized by the inverter driving circuit, rotor 1137 rotates with shaft 1325. In accordance with the rotation of main shaft portion 1320 of shaft 1325, cylindrical hollow portion 1342 formed by sleeve 1343 rotates. Insertion member 1346 tries to rotate with the rotation of cylindrical hollow portion 1342, but in reality insertion member 1346 rotates at a number of revolution far smaller than that of cylindrical hollow portion 1342 since impellers 1347 receive strong viscous resistance in the rotational direction within oil 1102. Thus, there is a difference in the number of revolution between cylindrical hollow portion 1342 and insertion member 1346, which difference is near the number of revolution of shaft 1325. Consequently, the oil having entered through path hole 1348 rises through spiral groove 1350 while being pulled by the rotation of cylindrical hollow portion 1342. Then, the oil further rises through communicating hole 1341 by the oil pressure thus generated, passes through lateral hole 1362, and reaches the sliding area formed by the inner surface of bearing 1116 and the outer surface of main shaft portion 1320 to lubricate that area.

At this stage, oil 1102 rises while rotating not only by the centrifugal force which decreases at low- speed revolution but by a pulling force generated by viscosity. Thus, oil can be drawn up in a stable manner even at the time of low-speed revolution such as 600 rpm.

According to this embodiment, insertion member 1346 and sleeve 1343 provide a thrust sliding area formed by bottom region 1352 and bottom surface 1345 which rotatably contact with each other. Thus, lateral pressure due to fixation is scarcely applied between sleeve 1343 and insertion member 1346, and there is very few possibility of occurrence of sliding abrasion between sleeve 1343 and insertion member 1346. It is thus possible to prevent generation of abrasion powder which is circulated with oil toward the sliding area and caught between the sliding components and thus brings about a locked condition of the compressing element. Accordingly, the compressor provided according to this embodiment is highly reliable.

A force in the downward direction as a reaction to a force for pushing up oil 1102 is applied to sleeve 1343. The downward force is given to the thrust sliding area forming by above mentioned bottom region 1352 and bottom surface 1345 as a load in the thrust direction. In this embodiment, the surface pressure applied to the thrust sliding area can be reduced by widening bottom surface 1345 of sleeve 1343, thereby improving abrasion resistance.

While not shown in the above respective embodiments, a spacer having abrasion resistance such as 4-fluorinated ethylene and valve steel may be interposed between bottom region 1352 and bottom surface 1345 to further enhance abrasion resistance.

The rotation of insertion member 1346 is prevented while impellers 1347 are receiving strong viscous resistance in the rotational direction within oil 1102. Thus, indirect fixing of insertion member 1346 to stator 1136 by a component for preventing the rotation of insertion member 1346 as in the conventional example is not needed. Also, since the structure is extremely simple, only a small number of components and processes are required and thus cost-reduction of the compressor can be attained.

According to the above respective embodiments, viscous pump 1340 is assembled in advance as an independent component by inserting insertion member 1346 into sleeve 1343 and forcedly inserting rod 1349 to which impellers 1347 are fixed through rod hole 1344 into small-diameter hole 1353 formed on bottom region 1352. After rotor 1137 is forcedly inserted into shaft 1325, viscous pump 1340 as the independent component is forcedly inserted into communicating hole 1341 to complete the assembly. Thus, drastically practical and enhanced productivity can be attained.

While the spiral projection is provided on the insertion member in the fourth through sixth embodiments, the spiral projection may be disposed on the cylindrical hollow portion to similarly form the spiral groove through which oil flows.

While description is made based on the reciprocating internal suspended-type compressor in the fourth through sixth embodiments, the present invention is applicable to internal fixed-type compressors such as vertical rotary-type compressors and scroll-type compressors as long as the lower end of their shafts extends to reach oil.

Types of gas and oil are not specifically limited. Needless to say, the advantages of the invention can be generally offered in any combination of all types of refrigerant involving environment-protective refrigerant such as HFC, HC and CO2 and all types of oil involving oil compatible with those refrigerant by employing the above materials having gas-resistance and oil-resistance properties for the components included in the viscous pump.

According to the invention as described above, a component for fixing the insertion member to the stator is not required, and thus a highly reliable and inexpensive compressor can be provided.

Another advantage offered according to the invention is that a material having high abrasion resistance can be used to further enhance reliability.

Another advantage offered according to the invention is that the viscous pump is assembled into one piece in advance, and thus a further inexpensive compressor can be provided.

Another advantage offered according to the invention is that the viscous pump assembled into one piece in advance, and thus a further inexpensive compressor can be provided.

Another advantage offered according to the invention is that the viscous pump is incorporated in the compressor which is elastically supported, and thus a highly reliable and inexpensive compressor can be provided.

Another advantage offered according to the invention is that the compressor is driven at a low-speed revolution, and thus a highly reliable and inexpensive compressor can be provided.

The force for pulling oil due to viscosity increases as the contact area between the inner surface of the rotational body and oil increases. However, the contact surface is chiefly formed by the flat smooth surface of sleeve 7112 and only insufficient force is applied to oil in the structure of the conventional example.

Additionally, there is a clearance between the end surface of spiral projection 7121 and the inner surface of sleeve 7112, which clearance is positioned at the outermost surface of insertion member 7120 in the conventional structure. The centrifugal force generated through the rotation of shaft 7111 is applied to oil within the oil passage formed by the spiral groove and the inner surface of sleeve 7112, and oil rises while rotating and inclining toward the inside surface. Thus, oil falls to flow out through the clearance between spiral projection 7121 and inner surface of sleeve 7112 and the oil supply amount to the upper area decreases.

Accordingly, especially in an extremely low driving frequency range such as 600 to 1,200 r/min., the force for pulling oil due to viscosity decreases and also the amount of oil which falls to flow out through the clearance between sleeve 7112 and insertion member 7120 increases. In this case, a sufficient oil amount cannot be transferred to the sliding area positioned above.

It is therefore an object of the present invention to provide a compressor capable of drawing up a sufficient amount of oil with efficiency even at the time of low-speed revolution.

Compressors in seventh and eighth embodiments are herein described with reference to the drawings.

### (Embodiment 7)

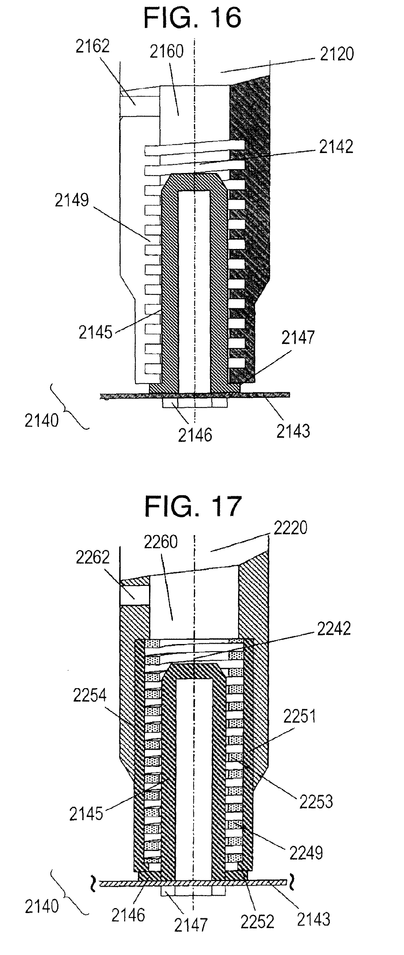

FIG. 15 is a cross-sectional view of a compressor in the seventh embodiment of the invention; FIG. 16 is a cross-sectional view illustrating a main part of the compressor in the seventh embodiment.

In FIGS. 15 and 16, oil 2102 is stored in closed container 2101 which is filled with refrigerant gas 2103.

Compressing element 2110 includes: block 2115 which forms cylinder 2113; piston 2117 reciprocatively inserted into cylinder 2113; shaft 2125 having main shaft portion 2120 supported by bearing 2116 of block 2115 and eccentric portion 2122; and connecting rod 2119 for connecting eccentric portion 2122 and piston 2117. Compressing element 2110 forms a reciprocating compressing mechanism.

Electrically-powered element 2135 is fixed below block 2115. Eleatrically-powered element 2135 includes stator 2136 connected to an inverter driving circuit (not shown) and rotor 2137 which contains permanent magnet and is fixed to main shaft portion 2120, thus providing an electrically-powered element for driving the inverter.

Springs 2139 elastically support compressing element 2110 via stator 2136 such that compressing element 2110 can be elastically held on closed container 2101.

Viscous pump 2140 soaked with oil 2102 is provided at the lower end of main shaft portion 2120 of shaft 2125. Viscous pump 2140 includes: cylindrical hollow portion 2142 formed in the lower region of main shaft portion 2120; insertion member 2145 coaxially inserted into cylindrical hollow portion 2142; and substantially-U-shaped bracket 2143 both ends of which are fixed to the lower region of stator 2136. Bracket 2143 engages with the lower end of insertion member 2145 to support insertion member 2145 such that insertion member 2145 cannot rotate.

Thread-shaped spiral projection 2149 is formed on the inner surface of cylindrical hollow portion 2142 to provide a spiral groove through which oil 2102 is allowed to flow between spiral projection 2149 and insertion member 2145.

Insertion member 2145 is hollow and a shaped component made from resin having refrigerant-resistance and oil-resistance properties. Insertion member 2145 has bracket insertion portion 2146 and rise prevention member 2147. Insertion member 2145 floats inside the cylindrical hollow portion, but is prevented from rising too high and rotating therein.

The operation of the compressor having the above structure is now described. When stator 2136 is energized by the inverter driving circuit, rotor 2137 rotates with shaft 2125. The eccentric motion of eccentric portion 2122 thus caused reciprocates piston 2117 within cylinder 2113 via connecting rod 2119, thereby carrying out predetermined actions for compressing gas which is taken in.

In accordance with the rotation of main shaft portion 2120 of shaft 2125, cylindrical hollow portion 2142 rotates. Insertion member 2145 engages with the center portion of substantially U-shaped bracket 2143 both ends of which are fixed to the lower region of stator 2136 to be supported by bracket 2143 in such a manner as not to rotate. In this structure, oil rises through the spiral groove while being pulled by the rotation of cylindrical hollow portion 2142. Then, oil further rises through communicating hole 2160 by the oil pressure thus caused, passes through lateral hole 2162, and finally reaches a sliding area formed by the inner surface of bearing 2116 and the outer surface of main shaft portion 2120 to lubricate that area.

At this stage, oil 2102 rises while rotating not only by the centrifugal force which decreases at low-speed revolution but by a pulling force generated by viscosity. In addition, spiral projection 2149 is formed on the cylindrical hollow portion to enlarge the area of the inner surface of the rotational body in contact with oil by adding the surface area of spiral projection 2149 in this embodiment. This structure causes large viscous resistance, thereby enhancing oil transfer capability.

Furthermore, centrifugal force generated by the rotation of shaft 2120 is applied to oil existing in the space between the spiral groove formed on the inner surface of cylindrical hollow portion 2142 and insertion member 2145. Thus, oil rises while rotating and inclining toward the roots of the spiral groove, i.e., the farthermost surface from the rotational shaft center of shaft 2120. Structurally there is no clearance in the vicinity of the roots of the spiral groove to which the centrifugal force is applied. Accordingly, oil does not fall to flow out, thereby preventing fall and outflow of oil.

As described above, enhanced oil transfer capability can be realized, allowing drawing up oil in a stable manner even at the time of low-speed revolution such as 600 r/min.

According to this embodiment, the compressing element is elastically supported, and insertion member 2145 engages with the center of bracket 2143 made from an elastic body to float within cylindrical hollow portion 2142 without rotating. Thus, lateral pressure due to fixation is scarcely applied between cylindrical hollow portion 2142 and insertion member 2145, and there is very few possibility of occurrence of sliding abrasion between cylindrical hollow portion 2142 and insertion member 2145. It is thus possible to prevent generation of abrasion powder which is circulated with oil toward the sliding area and caught between the sliding components and thus brings about a locked condition of the compressing element. Accordingly, the compressor provided according to this embodiment is highly reliable.

### (Embodiment 8)

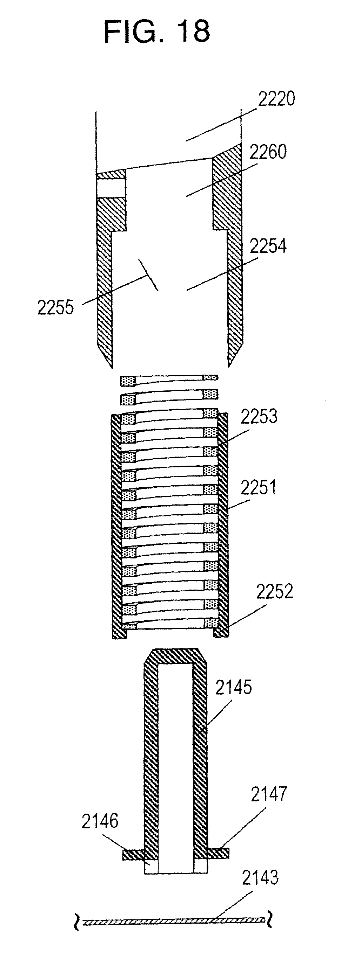

FIG. 17 is a cross-sectional view illustrating a main part of a compressor in an eighth embodiment of the invention; and FIG. 18 is an assembly view of the main part in the eighth embodiment. The eighth embodiment is herein described with reference to FIGS. 17 and 18. Similar numbers are given to the structures similar to those of the seventh embodiment, and detailed description of those is omitted.

Viscous pump 2240 soaked with oil 2102 is provided at the lower end of main shaft portion 2220 of shaft 2225.

Communicating hole 2260 and sleeve attachment hole 2254 are coaxially formed within main shaft portion 2220. Viscous pump 2240 includes: sleeve 2251 which is forcedly inserted into sleeve attachment hole 2254 to be fixed thereto and forms cylindrical hollow portion 2242; coil spring 2253 secured to the inner surface of sleeve 2251 as a spiral member; insertion member 2145 coaxially and rotatably inserted into sleeve 2251; and bracket 2143. Bracket 2143 which is made from an elastic body is substantially U-shaped, both ends of which are fixed to the lower region of stator 2136. The center of bracket 2143 engages with the lower end of insertion member 2145 to support insertion member 2145 in such a manner that insertion member cannot rotate.

Sleeve 2251 is substantially cylindrical and cap-shaped, whose top and bottom are open. Sleeve 2251 has spring holder 2252 at its lower end. Sleeve 2251 is made from iron plate press material which offers comparatively high accuracy, but may be formed from other materials such as leaf spring steel.

The length of coil spring 2253 is larger than the total length of the inner surface of sleeve 2251 from which the height of the spring holder 2252 is subtracted. Coil spring 2253 is made from oil temper wire for springs (JIS:SWOV) in this embodiment, but may be made from other material including iron steel such as piano wire (JIS:SWP) and spring steel (JIS:SUP), non-iron metal such as aluminum, and resins whose thermal deformation temperature is 100°C or higher and which has high formability such as polycarbonate (PC) and polyamide (PA).

Cylindrical hole 2255 formed by the lowermost end surface of main shaft portion 2220 has one step to provide a smaller-diameter hole. Sleeve attachment hole 2254 into which a predetermined length of sleeve 2251 is forcedly inserted is formed in a hole on the first step, while communicating hole 2260 is formed in a hole on the second step. The inner surface diameter of communicating hole 2260 is slightly smaller than the inner surface diameter of sleeve 2251. Coil spring 2253 is compressed between spring holder 2252 at the lower end of the sleeve and the step formed by the difference in the inner surface diameter between sleeve 2251 and communicating hole 2260 to be fixed to the inner surface of sleeve 2251.

Insertion member 2145 is formed by a shaped resin component having refrigerant-resistance and oil-resistance properties in this embodiment, but may be comparatively light metal such as aluminum. Insertion member 2145 is a hollow component, and has bracket insertion portion 2146 and rise prevention member 2147. Insertion member 2145 floats inside the cylindrical hollow portion, but is prevented from rising too high and rotating therein.

The operation of the compressor having the above structure is now described.

When stator 2136 is energized by the inverter driving circuit, rotor 2137 rotates with shaft 2125. Then, operations similar to those in the seventh embodiment are performed to supply oil.

According to this embodiment, the structure which uses the shape of the coil spring itself as the spiral groove provided on the inner surface of the lower end of the shaft can be far more easily formed than the structure in which a spiral groove is directly engraved on the inner surface of the lower end of the shaft. From the viewpoint of energy saving, the amount of oil transfer can be appropriately controlled by replacing the coil spring with the one having a different wire diameter, wire cross-sectional shape, number of winding etc., in accordance with the driving frequency required by the system side such as household refrigerators and air conditioners. Thus, the compressor of this embodiment is highly flexible and capable of meeting a wide variety of demands. Moreover, by forcedly inserting sleeve 2251 provided with coil spring 2253 on its inner surface in advance into sleeve attachment hole 2254 formed coaxially with main shaft portion 2220, sleeve 2251 is attached to the lower end region of main shaft portion 2220 and simultaneously coil spring 2253 is compressed between spring holder 2252 at the lower end of the sleeve and the step formed by the difference in the inner surface diameter between sleeve 2251 and communicating hole 2260 to be fixed to the inner surface of sleeve 2251. Accordingly, the formation of the spiral groove necessary for transferring oil upward is easily completed, and thus considerably practical and high productivity can be achieved.

According to the present invention as described above, it is possible to secure a wide area in contact with oil which causes viscous resistance needed for the rotational rising movement of oil. Accordingly, the force for pulling oil due to viscosity increases and thus an enhanced oil transfer capability can be obtained.

Another advantage of the invention is that the assembly in this embodiment which uses the shape of the coil spring itself as the spiral groove is more facilitated than in an example in which a groove is engraved. Also, the amount of oil transfer can be appropriately controlled by replacing the coil spring with the one having a different wire diameter, wire cross-sectional shape, number of winding etc., which enhances the flexibility. Further, the spiral groove formed by the coil spring is simultaneously provided when the sleeve is forcedly inserted, which increases the productivity.

Another advantage of the invention is that power consumption of household refrigerators and air-conditioners is reduced since input to the compressor is decreased during low-speed driving and oil supply is stabilized.

Another advantage of the invention is that the insertion member floats but not rotates inside the cylindrical hollow portion during the operation of the compressing element. This provides a structure in which oil is pulled by viscosity and also prevents abrasion and chipping due to the contact and collision between the inner surface of the cylindrical hollow portion and the outer surface of the insertion member which damages may lead to deterioration of the pumping ability and bring about excessive abrasion and a locked condition of the compressing element. Accordingly, long-term reliability can be secured.

Another advantage of the invention is that the components included are not required to be fixed on the closed container. Since the insertion member only floats inside the cylindrical hollow portion, lateral pressure due to fixation is scarcely applied between the cylindrical hollow portion and the insertion member and there is very few possibility of occurrence of sliding abrasion between the cylindrical hollow portion and the insertion member. Thus, a highly reliable compressor which includes the viscous pump and is elastically supported can be provided.

In the above-described conventional structure, bracket 7115 and insertion member 7120 engage with each other through longitudinal groove 7521. Thus, the wall surface of the longitudinal groove of insertion member 7120 collides with engagement portion 7523 of bracket 7115 at every start-up, and the wall surface of the longitudinal groove is kept pressed thereon during continuous driving. As a result, abrasion occurs due to rubbing of the engagement portion, or bracket 7115 is twisted and the stress is concentrated on the bended portion or other position of bracket 7115, which causes fatigue to develop for a period of time.

When abrasion and fatigue thus caused further develop, thin film projections (extrusion) and depression of cracks (intrusion) occur at the engagement portion and the bended portion. Especially, the depression develops into visual minute cracks, which gradually spread to finally cause corruption of bracket 7115. In this case, the rotation of insertion member 7120 inside sleeve 7112 may not be restricted.

Thus, it is difficult to maintain the structure of viscous pump 7113 in a stable condition for a long period of time.

For solving the above problem, an object of the present invention is to provide a highly reliable compressor capable of maintaining the structure of viscous pump 7113 for a long-term period without causing abrasion and fatigue by the contact between components at the time of restriction of the rotation of insertion member 7120.

Ninth and tenth embodiments according to the present invention are now described with reference to the drawings. However, the invention is not limited to those embodiments.

### (Embodiment 9)

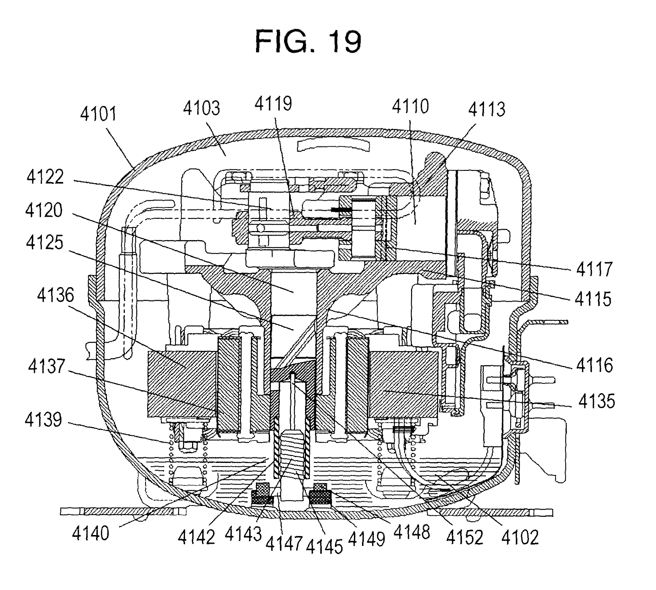

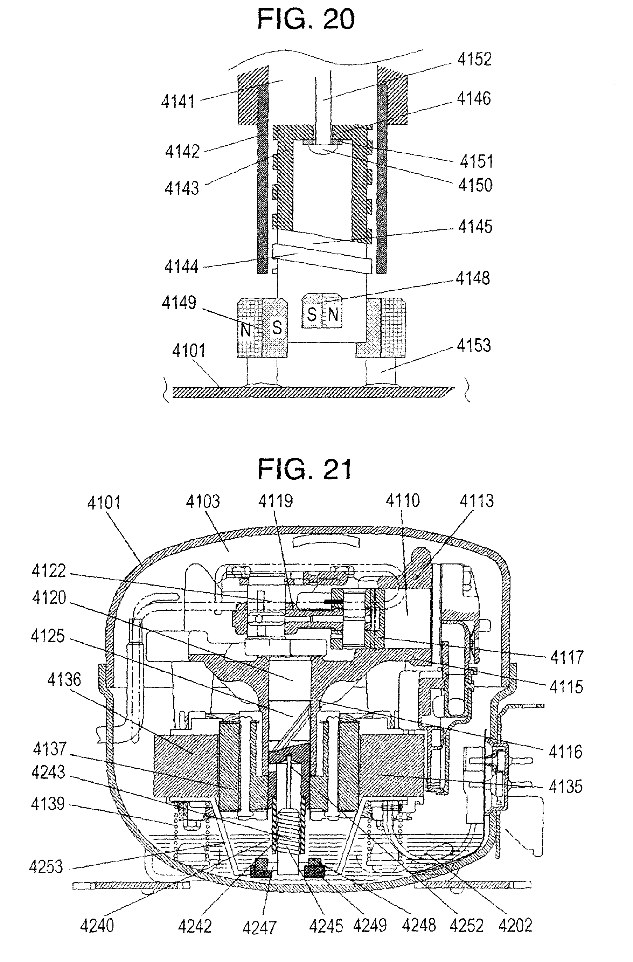

FIG. 19 is a cross-sectional view illustrating a compressor in the ninth embodiment of the invention, and FIG. 20 is a cross-sectional view illustrating a main part of the compressor in the ninth embodiment.

In FIGS. 19 and 20, oil 4102 is stored in closed container 4101 which is filled with refrigerant gas 4103.

Compressing element 4110 includes: block 4115 which forms cylinder 4113; piston 4117 reciprocatively inserted into cylinder 4113; shaft 4125 having main shaft portion 4120 supported by bearing 4116 of block 4115 and eccentric portion 4122; and connecting rod 4119 for connecting eccentric portion 4122 and piston 4117. Compressing element 4110 forms a reciprocating compressing mechanism.

Electrically-powered element 4135 is fixed below block 4115, and includes stator 4136 connected to an inverter driving circuit (not shown) and rotor 4137 which contains permanent magnet and is fixed to main shaft portion 4120. Electrically-powered element 4135 provides an electric motor for driving the inverter, and is driven at a plurality of driving frequencies including those below 20Hz, for example, by the inverter driving circuit (not shown).

Springs 4139 elastically support compressing element 4110 via stator 4136 such that compressing element 4110 is elastically held on closed container 4101.

Viscous pump 4140 soaked with oil 4102 is provided at the lower end of main shaft portion 4120 of shaft 4125.

Next, the structure of viscous pump 4140 is described in detail.

Cylindrical hollow portion 4141 is formed in main shaft portion 4120. Hollow sleeve 4142 is fixed to the lower region of cylindrical hollow portion 4141. Sleeve 4142 is substantially cylindrical and cap-shaped, whose top and bottom are open. Sleeve 4142 is made from iron plate press material which offers comparatively high accuracy in this embodiment, but may be formed from leaf spring steel.

Insertion member 4143 coaxially inserted into cylindrical hollow portion 4141 and sleeve 4142 is made from a plastic material which has lower thermal conductivity than the metal material which forms shaft 4125 and possesses refrigerant-resistance and oil-resistance properties such as PPS, PBT, and PEEK. Spiral groove 4144 is engraved on the outer surface of insertion member 4143, whereby oil passage 4145 through which oil flows is provided between spiral groove 4144 and the inner surface of sleeve 4142. The difference between the outermost diameter of insertion member 4143 and the inside diameter of sleeve 4142, i.e., the matching clearance is established in a range from 100µm to 500µm. Insertion member 4143 has bolt hole 4146 at its upper end surface, and a plurality of arms 4147 at its lower sides which extend substantially in the horizontal direction.

Bolt 4150 is employed as supporting member 4152 for slidingly connecting insertion member 4143 with sleeve 4142. Bolt 4150 inserted through washer 4151 penetrates bolt hole 4146 and reaches the upper surface of cylindrical hollow portion 4141 to be attached thereto, thereby rotatably connecting insertion member 4143 to main shaft portion 4120 of shaft 4125 and closing the lower end of bolt hole 4146. Washer 4151 is made from a plastic material having high abrasion-resistance property such as self-lubrication characteristic (PPS, PEE and PEEK etc.). Alternatively, bolt 4150 may be formed from a similar self-lubrication material to eliminate washer 4151.

First permanent magnet 4148 is fixed to each arm 4147 which is disposed on the lower sides of insertion member 4143 to extend substantially in the horizontal direction. Also, each second permanent magnet 4149 is provided on the inner surface of the bottom of closed container 4101 via joint 4153 such that the S-pole of second permanent magnet 4149 is opposed to the S-pole of first permanent magnet 4148 in the rotational direction with a predetermined space therebetween sufficiently within the reach of magnetic force. Alternatively, the N-poles of both permanent magnets 4148 and 4149 may be opposed to each other.

The operation of the compressor having the above structure is herein described.

Main shaft portion 4120 rotates with the rotation of shaft 4125. Sleeve 4142 fixed to main shaft portion 4120 rotates in synchronization with the rotation of main shaft portion 4120. Insertion member 4143 is pulled by the rotation of sleeve 4142, but the rotation of insertion member 4143 is prevented by the repulsion between the same poles of first permanent magnet 4148 provided on the insertion member and second permanent magnet 4149. As a result, oil rises through oil spiral passage 4145 while rotating and being pulled by the inner surface of sleeve 4142 due to viscosity.

At this stage, oil 4102 rises while rotating not only by the centrifugal force which decreases at low- speed revolution but by a pulling force generated by viscosity. Thus, oil 4102 can be drawn up in a stable manner even at the time of low-speed revolution such as 600 rpm.

According to this embodiment as described above, the rotation of insertion member 4143 is prevented by a non-contact method utilizing the repulsion between first permanent magnet 4148 and second permanent magnet 4149, causing no abrasion and fatigue by the contact between the components in relation to the restriction of insertion member 4143. Accordingly, the structure of viscous pump 4140 is maintained in a stable condition for a long period of time, and thus a highly reliable compressor can be provided.

According to this embodiment, second permanent magnet 4149 is disposed in the vicinity of the inner surface of the bottom of closed container 4101 for the structural reason of the compressor. Thus, joints 4153 require not a complicated but an extremely simple structure so as to secure second permanent magnet 4149 to closed container 4101.

Second permanent magnet 4149 is directly or indirectly fixed on closed container 4101, but is kept prevented from contacting with first permanent magnet 4148 since the same poles are opposed. Consequently, sound and vibration generated from compressing element 4110 and electrically-powered element 4135 are not transmitted though first permanent magnet 4148 and second permanent magnet 4149 to closed container 4101.

According to this embodiment, insertion member 4143 is rotatably connected to main shaft portion 4120 of shaft 4125 by means of bolt 4150 which is inserted through washer 4151. Thus, the position of insertion member 4143 relative to sleeve 4142 fixed at the lower end of main shaft portion 4120 is determined by this connecting portion, and an almost constant clearance is maintained between insertion member 4143 and sleeve 4142. This clearance is maintained by the fact that lateral pressure due to fixation is scarcely caused and also that the oil pressure is generated between insertion member 4143 and sleeve 4142. Accordingly, there is very few possibility of occurrence of sliding abrasion between insertion member 4143 and sleeve 4142.

Spiral groove 4144 is provided on the outer surface of insertion member 4143 to form spiral oil passage 4145 in this embodiment, but may be disposed on the inner surface of sleeve 4142 to form oil passage 4145. In this case, the area of the inner surface of the rotational body in contact with oil 4102 is enlarged by adding the surface area of the concaves of the spiral groove. This structure causes large viscous resistance, thereby enhancing oil 4102 transfer capability. Moreover, centrifugal force generated through the rotation of main shaft portion 4120 is applied to oil 4102 existing within the oil passage 4145 formed between the inner surface of sleeve 4142 and the outside surface of insertion member 4143, and the oil rises while rotating and inclining toward the farthermost surface from the rotational shaft center in oil passage 4145. Since there is no clearance in the position to which the centrifugal force is most applied, oil does not fall to flow out and thus the amount of oil which falls to flow out can be decreased. Accordingly, the compressor in this embodiment obtains considerably higher oil transfer capability than the example in which spiral groove 4144 is formed on insertion member 4143.

### (Embodiment 10)

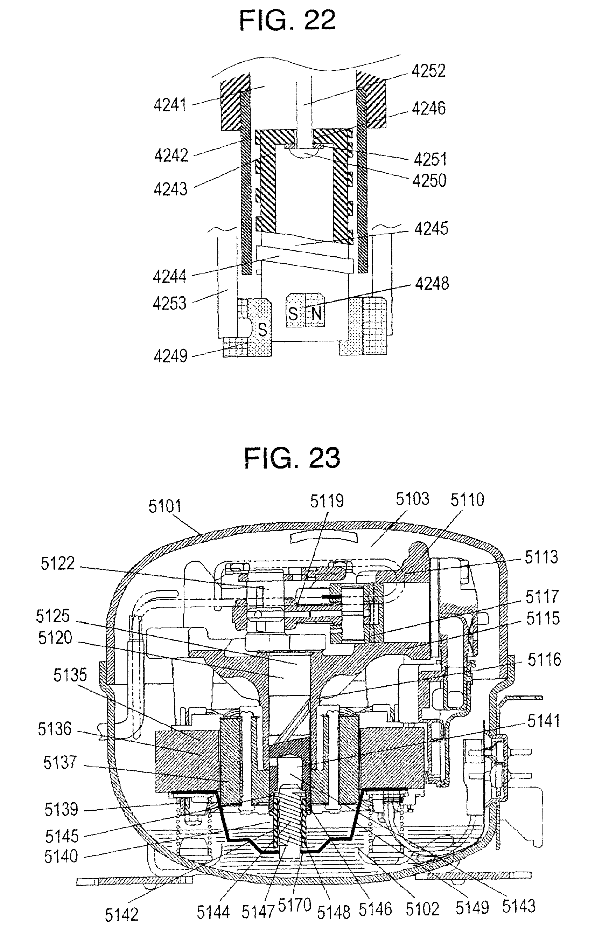

FIG. 21 is a cross-sectional view illustrating a compressor in a tenth embodiment of the invention, and FIG. 22 is a cross-sectional view illustrating a main part of the compressor in the tenth embodiment.

The tenth embodiment is herein described with reference to FIGS. 21 and 22. Similar numbers are given to the structures similar to those of the ninth embodiment, and detailed description of those is omitted.

Viscous pump 4240 soaked with oil 4202 is provided at the lower end of main shaft portion 4120 of shaft 4125.

Next, the structure of viscous pump 4240 is described in detail.

Cylindrical hollow portion 4241 is formed in main shaft portion 4120. Hollow sleeve 4242 is fixed to the lower region of cylindrical hollow portion 4241. Sleeve 4242 is substantially cylindrical and cap-shaped, whose top and bottom are open. Sleeve 4242 is made from iron plate press material which offers comparatively high accuracy in this embodiment, but may be formed from leaf spring steel.

Insertion member 4243 coaxially inserted into cylindrical hollow portion 4241 and sleeve 4242 is made from a plastic material which has lower thermal conductivity than the metal material which forms shaft 4125 and possesses refrigerant-resistance and oil-resistance properties such as PPS, PBT, and PEEK. Spiral groove 4244 is engraved on the outer surface of insertion member 4243, whereby oil passage 4245 through which oil flows is provided between spiral groove 4244 and the inner surface of sleeve 4242. The difference between the outermost diameter of insertion member 4243 and the inside diameter of sleeve 4242, i.e., the matching clearance is established in a range from 100µm to 500µm. Insertion member 4243 has bolt hole 4246 at its upper end surface, and a plurality of arms 4247 at its lower sides which extend substantially in the horizontal direction.

Bolt 4250 is employed as supporting member 4252 for slidingly connecting insertion member 4243 with sleeve 4242. Bolt 4250 inserted through washer 4251 penetrates bolt hole 4246, and reaches the upper surface of cylindrical hollow portion 4241 to be attached thereto, thereby rotatably connecting insertion member 4243 to main shaft portion 4120 of shaft 4125 and closing the lower end of bolt hole 4246. Washer 4251 is made from a plastic material having high abrasion-resistance property such as self-lubrication characteristic (PPS and PEEK etc.). Alternatively, bolt 4250 may be formed from a similar self-lubrication material to eliminate washer 4251.

First permanent magnet 4248 is fixed to each arm 4247 which is disposed on the lower sides of insertion member 4243 to extend substantially in the horizontal direction. Also, each second permanent magnet 4249 is provided such that the S-pole of second permanent magnet 4249 is opposed to the S-pole of first permanent magnet 4248 in the rotational direction with a predetermined space therebetween sufficiently within the reach of magnetic force. Each second permanent magent 4249 is fixed on one end of substantially L-shaped joint 4253 the other end of which is secured to the lower region of stator 4136. The N-poles of both permanent magnets 4248 and 4249 may be opposed to each other.

The operation of the compressor having the above structure is herein described.

Main shaft portion 4120 rotates with the rotation of shaft 4125. Sleeve 4242 fixed to main shaft portion 4120 rotates in synchronization with the rotation of main shaft portion 4120. Insertion member 4243 is pulled by the rotation of sleeve 4242, but the rotation of insertion member 4243 is prevented by the repulsion between the same poles of first permanent magnet 4248 provided on the insertion member and second permanent magnet 4249. As a result, oil rises through oil spiral passage 4245 while rotating and being pulled by the inner surface of sleeve 4242 due to viscosity.

At this stage, oil 4202 rises while rotating not only by the centrifugal force which decreases at low- speed revolution but by a pulling force generated by viscosity. Thus, oil can be drawn up in a stable manner even at the time of low-speed revolution such as 600 rpm.

According to this embodiment as described above, the rotation of insertion member 4243 is restrained by a non-contact method through the same mechanism as in the ninth embodiment, causing no abrasion and fatigue by the contact between the components in relation to the restriction of insertion member 4243. Accordingly, the structure of viscous pump 4240 is maintained in a stable condition for a long period of time, and thus a highly reliable compressor can be provided.

According to this embodiment, insertion member 4243 having first permanent magnets 4248 is connected to main shaft portion 4120 via bolt 4250, and second permanent magnets 4249 are secured to the lower region of stator 4136 via joints 4253. It is thus possible to attach all the components included in viscous pump 4240 to electrically-powered element 4135 or compressing element 4110 in advance, and assembly is facilitated and productivity is enhanced by collectively installing those components in closed container 4101.

Second permanent magnets 4249 are fixed to the lower part of electrically-powered element 4135 having stator 4136 through joints 4253 in this embodiment, but may be secured to any component of compressing element 4110 such as block 4115 through joints 4253.

As described above, no abrasion and fatigue by the contact between the components in relation to the restriction of the insertion member are caused in the invention and the structure of the viscous pump is maintained in a stable condition for a long period of time. Thus, a highly reliable compressor can be provided.

In the invention, the structure is considerably simple and the second permanent magnets are kept prevented from contacting with the first permanent magnets since the same poles are opposed. As a result, sound and vibration generated from the compressing element and the electrically-powered element are not transmitted through the first permanent magnets and the second permanent magnets to the outside of the closed container, and thus a highly reliable compressor can be provided.

In the invention, it is possible to attach all the components included in the viscous pump to the electrically-powered element or the compressing element in advance and collectively install these components in the closed container. Accordingly, assembly is facilitated and productivity is increased, and thus a highly reliable compressor can be provided.

In the invention, generation of abnormal sound caused by vibration is prevented, and thus a highly reliable compressor can be provided.

In the invention, input to the compressor which drives at driving frequencies including at least in a range from 600 to 1,200 r/min. is reduced and the structure of the viscous pump is maintained in a stable condition for a long period of time. Accordingly, power consumption is lowered and thus a highly reliable compressor is provided.

In the invention, the rotation of the insertion member is prevented by a non-contact method utilizing repulsion between the permanent magnets. Accordingly, no abrasion and fatigue by the contact between the components in relation to the restriction of the insertion member are caused and the structure of the viscous pump is maintained in a stable condition for a long period of time. Thus, a highly reliable compressor can be provided.

The structure of the viscous pump can be maintained in a stable condition for a long period of time by preventing the rotation of the insertion member by a non-contact method, and thus a highly reliable compressor can be provided.

In the conventional structure in which bracket 7115 supports the weight of insertion member 7120 at two points, insertion member 7120 inserted into sleeve 7112 is inclined and contacts sleeve 7112. When bracket 7115 does not have high dimensional accuracy or the center of gravity of insertion member 7120 is off the shaft center, the contact between the upper end of longitudinal groove 7621 provided at the lower end of insertion member 7120 and bracket 15 becomes a point contact. In this case, abrasion or fixation between sleeve 7112 and insertion member 7120 may be caused, resulting in deterioration of the pumping ability and generation of abrasion powder which is circulated with oil toward the sliding area and caught between the sliding components and brings about a locked condition of the compressing element.

An object of the present invention is to provide a highly reliable compressor.

Eleventh through thirteenth embodiments are herein described with reference to the drawings. The invention is not limited to those embodiments.

### (Embodiment 11)

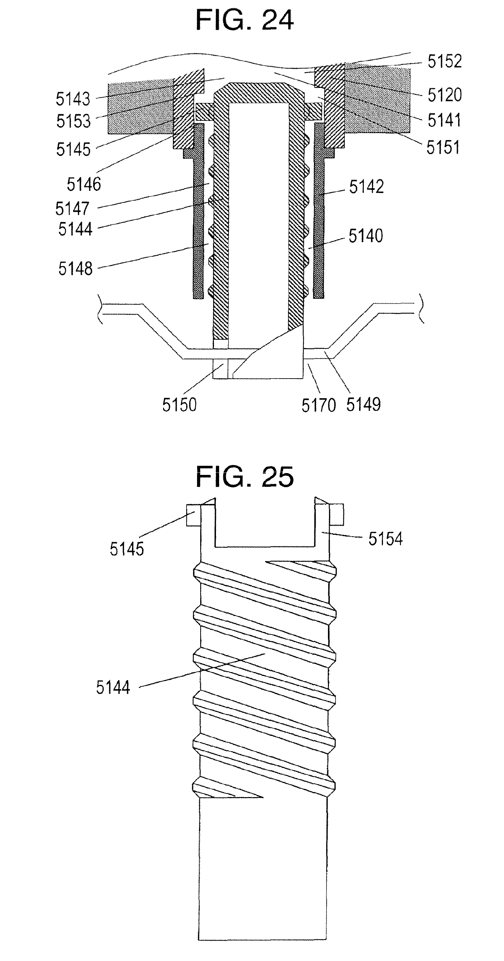

FIG. 23 is a cross-sectional view illustrating a compressor in the eleventh embodiment of the invention, FIG. 24 is a cross-sectional view illustrating a main part of the compressor in the eleventh embodiment, and FIG. 25 is an enlarged view illustrating a main part of an insertion member in the eleventh embodiment.

In FIGS. 23, 24 and 25, oil 5102 is stored in closed container 5101 which is filled with refrigerant gas 5103.

Compressing element 5110 includes: block 5115 which forms cylinder 5113; piston 5117 reciprocatively inserted into cylinder 5113; shaft 5125 having main shaft portion 5120 supported by bearing 5116 of block 5115 and eccentric portion 5122; and connecting rod 5119 for connecting eccentric portion 5122 and piston 5117. Compressing element 5110 forms a reciprocating compressing mechanism.

Electrically-powered element 5135 is fixed below block 5115, and includes stator 5136 connected to an inverter driving circuit (not shown) and rotor 5137 which contains permanent magnet and is fixed to main shaft portion 5120. Electrically-powered element 5135 provides an electric motor for driving an inverter, and is driven at a plurality of driving frequencies including those below 1,200 rpm, for example, by the inverter driving circuit (not shown).

Springs 5139 elastically support compressing element 5110 via stator 5136 such that compressing element 5110 is elastically held on closed container 5101.

Viscous pump 5140 soaked with oil 5102 is provided at the lower end of main shaft portion 5120 of shaft 5125.

Next, the structure of viscous pump 5140 is described in detail.

Hollow portion 5141 is formed in main shaft portion 5120. Hollow sleeve 5142 is fixed to the lower region of hollow portion 5141 to form cylindrical hollow portion 5143. Sleeve 5142 is substantially cylindrical and has a wall thickness in a range from about 0.5mm to about 1.0mm. Sleeve 5142 is cap-shaped whose top and bottom are open. Sleeve 5142 is made from iron plate press material which offers comparatively high accuracy in this embodiment, but may be formed from leaf spring steel.

Insertion member 5144 coaxially inserted into cylindrical hollow portion 5143 has a plurality of projections 5145 on its upper outside surface, and receiving portion 5146 at the upper end of sleeve 5142 (corresponding to the thin-wall portion of sleeve 5142) rotatably receives the thrust surfaces of projections 5145 in a face contact condition. The difference between the inside diameter of cylindrical hollow portion 5143 and the outermost diameter of projections 5145 is determined within a range from 0.1mm to 0.5mm. As for the method of installing insertion member 5144, projections 5145 of insertion member 5144 which has been inserted into sleeve 5142 in advance are disposed in such a position as to be received by receiving portion 5146 at the upper end of sleeve 5142, and subsequently sleeve 5142 is fixed. By this method, installment of the insertion member can be simultaneously completed. Alternatively, in a structure in which projections 5145 are disposed on free joint 5154 which is elastically deformable in the radial direction, insertion member 5144 may be inserted and positioned after sleeve 5142 is forcedly inserted into cylindrical hollow portion 5141 and fixed thereto.

Insertion member 5144 is made from a synthetic resin material which has lower thermal conductivity than the metal material which forms shaft 5125 and possesses refrigerant-resistance and oil-resistance properties such as PPS, PBT, and PEEK. Spiral groove 5147 is engraved on the outer surface of insertion member 5144, whereby oil passage 5148 through which oil flows is provided between spiral groove 5147 and the inner surface of sleeve 5142. The difference between the inside diameter of sleeve 5142 and the outermost diameter of insertion member 5144 is almost equivalent to or slightly larger than the difference between the inside diameter of cylindrical hollow portion 5143 and the outermost diameter of projections 5145.

Substantially U-shaped bracket 5149 formed by an elastic body both ends of which are fixed to the lower region of stator 5136 are provided as means 5170 for preventing rotation of insertion member 5144. The center of bracket 5149 engages with vertical groove 5150 provided at the lower end of insertion member 5144 to support insertion member 5144 while preventing the rotation of insertion member.

Main shaft portion 5120 has hollow portion 5141 which includes large-diameter portion 5151 and small-diameter portion 5152. Insertion member 5144 is supported inside cylindrical hollow portion 5143 while being prevented from rising by disposing projections 5145 in such a position as to be sandwiched between receiving portion 5146 and step 5153 formed by large-diameter portion 5151 and small-diameter portion 5152 with a certain clearance in the vertical direction.

The operation of the compressor having the above structure is now described.

Main shaft portion 5120 rotates with the rotation of shaft 5125. Cylindrical hollow portion 5143 rotates in synchronization with the rotation of main shaft portion 5120. The thrust surfaces of projections 5145 of insertion member 5144 are rotatably received by receiving portion 5146 formed on sleeve 5142. Insertion member 5144 is pulled by the rotation of cylindrical hollowportion 5143, but the rotation of insertion member 5144 is prevented by bracket 5149.

As a result, oil rises through spiral oil passage 5148 while rotating and being pulled by the inner surface of cylindrical hollow portion 5143 due to viscosity. At this stage, oil 5102 rises while rotating not only by the centrifugal force which decreases at low-speed revolution but by a pulling force generated by viscosity. Thus, oil 5102 can be drawn up in a stable manner even at the time of low-speed revolution such as 600 rpm.

According to this embodiment, the position of insertion member 5144 relative to cylindrical hollow portion 5143 is determined by the surface contact between receiving portion 5146 and the thrust surfaces of projections 5145 provided on insertion member 5144. Accordingly, an almost constant clearance between insertion member 5144 and cylindrical hollow portion 5143 is maintained and thus excessive lateral pressure which may be produced by fixation is scarcely generated. As fluid film pressure also develops within spiral groove 5147, there is very few possibility of occurrence of sliding abrasion between insertion member 5144 and cylindrical hollow portion 5143.

Accordingly, it is possible to prevent generation of abrasion powder which is circulated with oil toward the sliding area and caught between the sliding components and brings about a locked condition of the compressing element, and thus a highly reliable compressor can be provided.

In this embodiment, sleeve 5142 is fixed to hollow portion 5141 provided in the lower region of shaft 5125, and receiving portion 5146 is formed by the upper end of sleeve 5142 to effectively utilize the thin-wall region of sleeve 5142 as receiving portion 5146. Thus, complicated processing is not required to form sleeve 5142 and shaft 5125, and a compressor which is inexpensive and has high productivity can be provided.

In this embodiment, insertion member 5144 including projections 5145, spiral groove 5147 and vertical groove 5150 is integrally formed from a self-lubricating synthetic resin. Thus, a compressor which is inexpensive and has high accuracy and high abrasion resistance can be provided.

Spiral groove 5147 is formed on the outer surface of insertion member 5144 to provide oil passage 5148 in this embodiment, but the spiral groove may be disposed on the inner surface of sleeve 5142 to form oil passage 5148. In this case, the area of the inner surface of the rotational body in contact with oil is enlarged by adding the surface area of the concaves of the spiral groove. This structure causes large viscous resistance, and thus oil transfer capability is enhanced.

### (Embodiment 12)

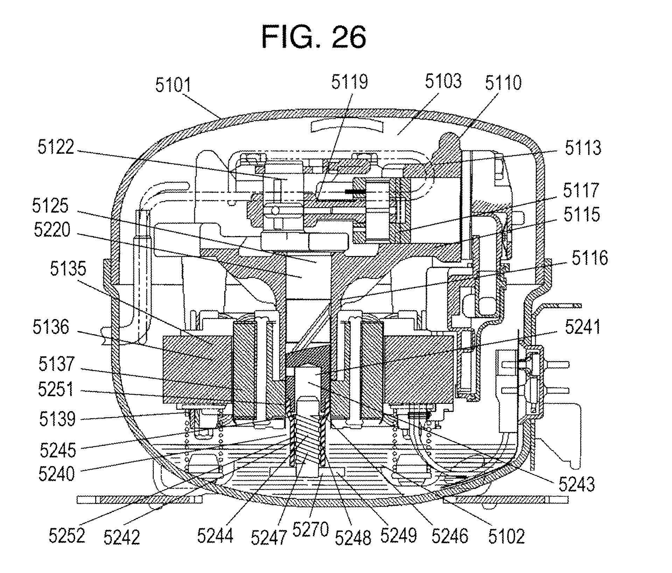

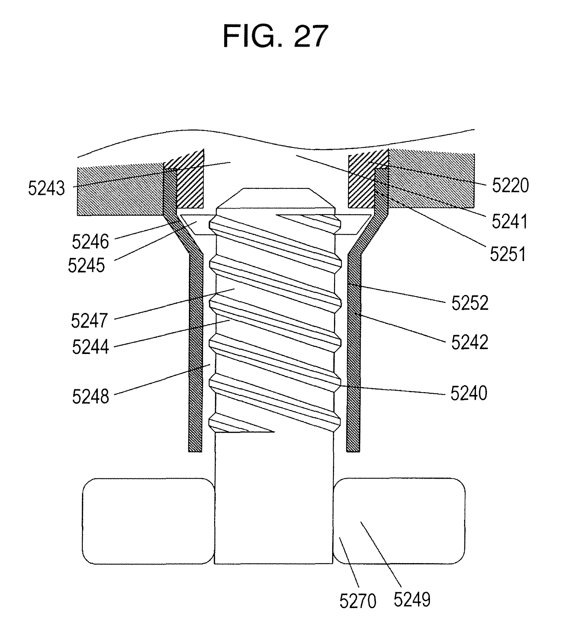

FIG. 26 is a cross-sectional view illustrating a compressor in a twelfth embodiment of the invention, and FIG. 27 is a cross-sectional view illustrating a main part of the compressor in the twelfth embodiment.

The twelfth embodiment is herein described with reference to FIGS. 26 and 27. Similar numbers are given to the structures similar to those of the eleventh embodiment, and detailed description of those is omitted.

Viscous pump 5240 soaked with oil 5102 is provided at the lower end of main shaft portion 5220 of shaft 5125.

Next, the structure of viscous pump 5240 is described in detail.

Hollow portion 5241 is formed in main shaft portion 5220. Hollow sleeve 5242 is inserted from outside and fixed to the lower region of hollow portion 5241 to form cylindrical hollow portion 5243. Sleeve 5242 is substantially cylindrical and has large-diameter portion 5251 and small-diameter portion 5252. The wall thickness of sleeve 5242 is determined in a range from about 0.5mm to about 1.0mm. Sleeve 5242 is cap-shaped whose top and bottom are open. Sleeve 5242 is made from iron plate press material which offers comparatively high accuracy, but may be formed from leaf spring steel.

Insertion member 5244 coaxially inserted into cylindrical hollow portion 5243 has a plurality of projections 5245 on its upper outside surface, and receiving portion 5246 formed by a step between large-diameter portion 5251 and small-diameter portion 5252 of sleeve 5242 rotatably receives the thrust surfaces of projections 5245 in a face contact condition. The thrust surface of receiving portion 5246 has a tapered shape, and the thrust surfaces of projections 5245 have tapered shapes in correspondence therewith. The difference between the inside diameter of receiving portion 5246 and the outermost diameter of projections 5245 is determined within a range from 0.1mm to 0.5mm. As for the method of installing insertion member 5244, projections 5245 of insertion member 5244 which has been inserted into sleeve 5242 in advance are disposed in such a position as to be received by receiving portion 5246 provided on the upper end of sleeve 5242, and subsequently insertion member 5244 is inserted from outside and fixed. By this method, installment of insertion member 5244 can be simultaneously completed.

Insertion member 5244 is made from a synthetic resin material which has lower thermal conductivity than the metal material which forms shaft 5125 and possesses refrigerant-resistance and oil-resistance properties such as PPS, PBT, and PEEK. Spiral groove 5247 is engraved on the outer surface of insertion member 5244, whereby oil passage 5248 through which oil flows is provided between spiral groove 5247 and the inner surface of sleeve 5242. The difference between the inside diameter of sleeve 5242 and the outermost diameter of insertion member 5244 is almost equivalent to or slightly larger than the difference between the inside diameter of receiving portion 5246 and the outermost diameter of projections 5245.

A plurality of impellers 5249 as means 5270 for preventing rotation of insertion member 5244 are disposed at the lower sides of insertion member 5244 to extend toward the periphery.

Insertion member 5244 is supported inside cylindrical hollow portion 5243 while being prevented from rising by disposing projections 5245 in such a position as to be sandwiched between the lower end of main shaft portion 5220 and receiving portion 5246 formed by large-diameter portion 5251 and small-diameter portion 5252 with a certain clearance in the vertical direction.

The operation of the compressor having the above structure is now described.

Main shaft portion 5220 rotates with the rotation of shaft 5125. Cylindrical hollow portion 5243 rotates in synchronization with the rotation of main shaft portion 5220. The thrust surfaces of projections 5245 of insertion member 5244 are rotatably received by receiving portion 5246 formed by large-diameter portion 5252 of sleeve 5242 and small-diameter portion 5252. Insertion member 5244 is pulled by the rotation of cylindrical hollow portion 5243, but rotates at a rotational frequency far lower than that of cylindrical hollow portion 5243 since impellers 5249 receive large viscous resistance in the rotational direction within oil 5102. Thus, there is a difference in rotational frequency between cylindrical hollow portion 5243 and insertion member 5244, which difference is near the rotational frequency of shaft 5125.

As a result, oil rises through spiral oil passage 5248 while rotating and being pulled by the inner surface of cylindrical hollowportion 5243 due to viscosity. At this stage, oil 5102 rises while rotating not only by the centrifugal force which decreases at low-speed revolution but by a pulling force generated by viscosity. Thus, oil can be drawn up in a stable manner even at the time of low-speed revolution such as 600 rpm.

According to this embodiment, the position of insertion member 5244 relative to cylindrical hollow portion 5243 is determined by the surface contact between receiving portion 5246 and the thrust surfaces of projections 5245 provided on insertion member 5244. Accordingly, an almost constant clearance between insertion member 5244 and cylindrical hollow portion 5243 is maintained and thus excessive lateral pressure which may be produced by fixation is scarcely generated. As fluid film pressure is generated within spiral groove 5247 and generation of the fluid film pressure is promoted by providing the tapered thrust surfaces of projections 5245 and receiving portion 5246, there is very few possibility of occurrence of sliding abrasion between insertion member 5244 and cylindrical hollow portion 5243.

Accordingly, it is possible to prevent generation of abrasion powder which is circulated with oil toward the sliding area and caught between the sliding components and brings about a locked condition of the compressing element, and thus a highly reliable compressor can be provided.

In this embodiment, sleeve 5242 is fixed to hollow portion 5241 provided in the lower region of shaft 5125, and receiving portion 5246 is formed by large-diameter portion 5251 and small-diameter portion 5252 of sleeve 5242 to effectively utilize the step of sleeve 5242 as receiving portion 5246. Thus, complicated processing is not required to form shaft 5125 and sleeve 5242, and a compressor which is inexpensive and has high productivity can be provided.

Since the rotation of sleeve 5242 is prevented by large viscous resistance applied to impellers 5249 in the rotational direction within oil 5102, indirect fixing of sleeve 5242 to stator 5136 or other components is not needed and the structure is considerably simplified requiring only a small number of components and processes. Thus, a viscous pump having high productivity can be provided.

### (Embodiment 13)

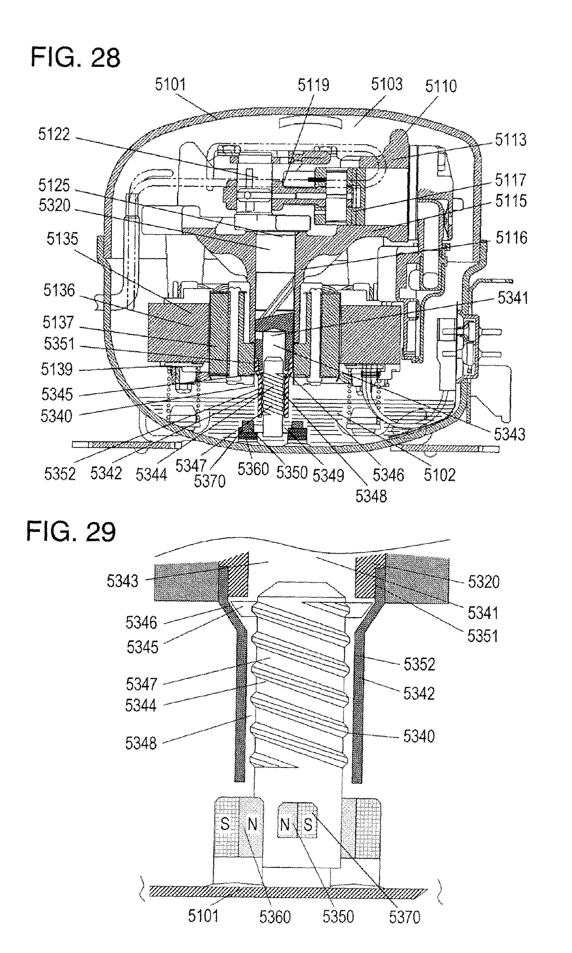

FIG. 28 is a cross-sectional view illustrating a compressor in a thirteenth embodiment of the invention, and FIG. 29 is a cross-sectional view illustrating a main part of the compressor in the thirteenth embodiment.

The thirteenth embodiment is herein described with reference to FIGS. 28 and 29. Similar numbers are given to the structures similar to those of the eleventh embodiment, and detailed description of those is omitted.

Viscous pump 5340 soaked with oil 5102 is provided at the lower end of main shaft portion 5320 of shaft 5125.

Next, the structure of viscous pump 5340 is described in detail.

Hollow portion 5341 is formed in main shaft portion 5320. Hollow sleeve 5342 is inserted from outside and fixed to the lower region of hollow portion 5341 to form cylindrical hollow portion 5343. Sleeve 5342 is substantially cylindrical and has large-diameter portion 5351 and small-diameter portion 5352. The wall thickness of sleeve 5342 is determined in a range from about 0.5mm to about 1.0mm. Sleeve 5342 is cap-shaped whose top and bottom are open, and is made from iron plate press material which offers comparatively high accuracy, but may be formed from leaf spring steel.

Insertion member 5344 coaxially inserted into cylindrical hollow portion 5343 has a plurality of projections 5345 on its upper outside surface, and receiving portion 5346 formed by a step between large-diameter portion 5351 and small-diameter portion 5352 of sleeve 5342 rotatably receives the thrust surfaces of projections 5345 in a face contact condition. The thrust surface of receiving portion 5346 has a tapered shape, and the thrust surfaces of projections 5345 have tapered shapes in correspondence therewith. The difference between the inside diameter of receiving portion 5346 and the outermost diameter of projections 5345 is determined within a range from 0.1mm to 0.5mm.

Spiral groove 5347 is engraved on the outer surface of insertion member 5344, whereby oil passage 5348 through which oil flows is provided between spiral groove 5347 and the inner surface of sleeve 5342. The difference between the inside diameter of sleeve 5342 and the outermost diameter of insertion member 5344 is almost equivalent to or slightly larger than the difference between the inside diameter of receiving portion 5346 and the outermost diameter of projections 5345. A plurality of arms 5349 radially project from the lower sides of insertion member 5344.

As means 5370 for preventing the rotation of insertion member 5344, permanent magnet 5350 is fixed on each arm 5349 formed on insertion member 5344, and each permanent magnet 5360 is fixed to the inner surface of the bottom of closed container 5101 in such a position as to be substantially opposed to each permanent magnet 5350 with a sufficient predetermined clearance within the reach of mutual magnetic force. The opposed surfaces of permanent magnet 5350 and permanent magnet 5360 have different poles from each other.

Insertion member 5344 is supported inside cylindrical hollow portion 5343 while being prevented from rising by disposing projections 5345 in such positions as to be sandwiched between the lower end of main shaft portion 5320 and receiving portion 5346 formed by large-diameter portion 5351 and small-diameter portion 5352 with a certain clearance in the vertical direction.

The operation of the compressor having the above structure is now described.

Main shaft portion 5320 rotates with the rotation of shaft 5125. Cylindrical hollow portion 5343 rotates in synchronization with the rotation of main shaft portion 5320. The thrust surfaces of projections 5345 of insertion member 5344 are rotatably received by receiving portion 5346 formed by large-diameter portion 5351 of sleeve 5342 and small-diameter portion 5352. Insertion member 5344 is pulled by the rotation of cylindrical hollow portion 5343, but the rotation of insertion member 5344 is prevented since permanent magnets 5350 and permanent magnets 5360 adhere to each other.

As a result, oil rises through spiral oil passage 5348 while rotating and being pulled by the inner surface of cylindrical hollow portion 5343 due to viscosity. At this stage, oil 5102 rises while rotating not only by the centrifugal force which decreases at low-speed revolution but by a pulling force generated by viscosity. Thus, oil can be drawn up in a stable manner even at the time of low-speed revolution such as 600 rpm.

According to this embodiment, the position of insertion member 5344 relative to cylindrical hollow portion 5343 is determined by the surface contact between receiving portion 5346 and the thrust surfaces of projections 5345 provided on insertion member 5344. Accordingly, an almost constant clearance between insertion member 5344 and cylindrical hollow portion 5343 is maintained and thus excessive lateral pressure which may be produced by fixation is scarcely generated. As fluid film pressure is generated within spiral groove 5347 and generation of the fluid film pressure is promoted by providing the tapered thrust surfaces of projections 5345 and receiving portion 5346, there is very few possibility of occurrence of sliding abrasion between insertion member 5344 and cylindrical hollow portion 5343.

Accordingly, it is possible to prevent generation of abrasion powder which is circulated with oil toward the sliding area and caught between the sliding components and brings about a locked condition of the compressing element, and thus a highly reliable compressor can be provided.

Additionally, the rotation of insertion member 5344 is prevented by permanent magnet 5350 fixed on each arm 5349 formed on insertion member 5344 and permanent magnet 5360 each fixed to the inner surface of the bottom of closed container 5101 in such a position as to be substantially opposed to each permanent magnet 5360 with a predetermined clearance. As a result, indirect fixing of insertion member 5344 to stator 5136 or other components is not needed and the structure is considerably simplified requiring only a small number of components and processes. Accordingly, a viscous pump having high productivity can be provided.

An example which utilizes adhering force of the permanent magnets is shown in this embodiment, but similar operation and advantage can be attained by utilizing repulsion force generated by disposing the same poles of the permanent magnets in such positions as to be opposed to each other in the rotational direction of shaft 5125 to prevent the rotation of insertion member 5344.

In this embodiment, iron dust such as abrasion powder floating in oil 5102 is collected by the permanent magnets which are disposed in oil 5102. Accordingly, the dust is prevented in advance from being caught between the components in the viscous pump or in the sliding areas during oil circulation, and thus reliability can be enhanced.

According to the compressor of the invention, the position of the insertion member relative to the sleeve is restricted and abrasion and fixation between the insertion member and the sleeve are scarcely caused. Thus, a highly reliable compressor can be provided.

In the compressor of the invention, the position of the insertion member relative to the sleeve is determined by the surface contact between the thrust surfaces of the projections and the receiving portion. Accordingly, abrasion and fixation between the insertion member and the cylindrical hollow portion are scarcely caused and thus a highly reliable compressor can be provided.

In the compressor of the invention, complicated processing is not required for forming the sleeve. Thus, a compressor which is inexpensive and has high productivity and reliability can be provided.

In the compressor of the invention, the step formed on the sleeve is utilized as the receiving portion. Accordingly, complicated processing is not required for forming the shaft and thus a compressor which is inexpensive and has high productivity and reliability can be provided.

In the compressor of the invention, fluid film pressure is easily generated due to the oil having flowed into the clearance between the projections and the receiving portion. Accordingly, the contact between the projections and the receiving portion is prevented and thus a compressor having high durability and reliability can be provided.

In the compressor of the invention, the rotation of the insertion member is prevented by a simple structure and the viscous pump is constructed in a reliable manner. Thus, a highly reliable compressor can be provided.

In the compressor of the invention, a process for fixing the insertion member is not required. Accordingly, a compressor which is easily assembled and has high productivity and high reliability can be provided.

In the compressor of the invention, the rotation of the insertion member is securely restrained and iron dust such as abrasion powder is collected by the magnets to prevent the dust from being caught between the components in the viscous pump or in the sliding areas in advance. Thus, a highly reliable compressor can be provided.

In the compressor of the invention, the insertion member which is inexpensive and has high accuracy and high abrasion resistance is employed. Thus, a highly reliable compressor can be provided.

In the compressor of the invention, vibration transmitted from the compressing element including the viscous pump and the electrically-powered element is reduced. Accordingly, generation of abnormal sound caused by vibration is eliminated and thus a highly reliable compressor can be provided.

In the compressor of the invention, oil supply is stabilized, and input to the compressor is decreased since the electrically-powered element is driven at driving frequencies including those lower than the power source frequency. Accordingly, power consumption is reduced and thus a highly reliable compressor can be provided.

In the above-described conventional structure, both ends of bracket 7115 are fixed to stator 7106. Additionally, stopper 7623 for preventing rotation of insertion member 7120 is provided at a position extremely close to the rotational shaft center. As a result, moment generated through the rotation applies large load to stopper 7623, thereby curving bracket 7115 into a twisted condition starting from the position of stopper 7623. If the twisted condition is continued, fatigue of material develops especially at the position of stopper 7623, and thin film projections (extrusion) and depression of cracks (intrusion) finally occur. Particularly, the depression develops into visual minute cracks, which gradually spread to finally cause corruption of bracket 7115. In this case, the rotation of insertion member 7120 inside sleeve 7112 may not be prevented.

Moreover, for dispersing the load applied on stopper 7623 or increasing the fatigue resistance strength of stopper 7623, bracket 7115 is required to have a complicated shape. In this case, the cost of the compressor is inevitably raised.

In order to solve these problems, an object of the present invention is to provide a compressor which is inexpensive and highly reliable, and is capable of maintaining the structure of viscous pump 7113 in a stable condition for a long period of time without causing material fatigue to the components in relation to the restriction of insertion member 7120.

Fourteenth and fifteenth embodiments of the invention are hereinafter described with reference to the drawings, and the invention is not limited to those embodiments.

### (Embodiment 14)

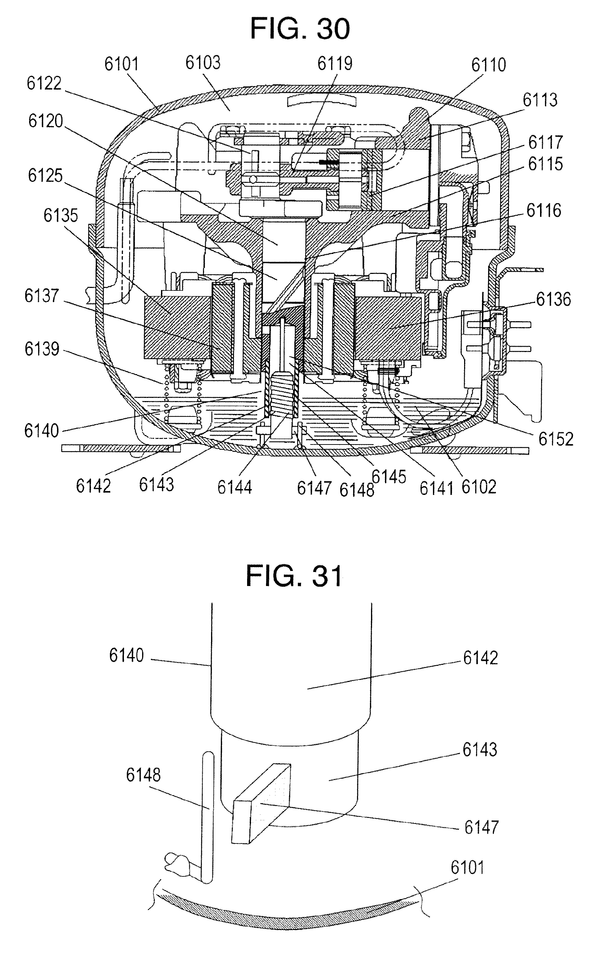

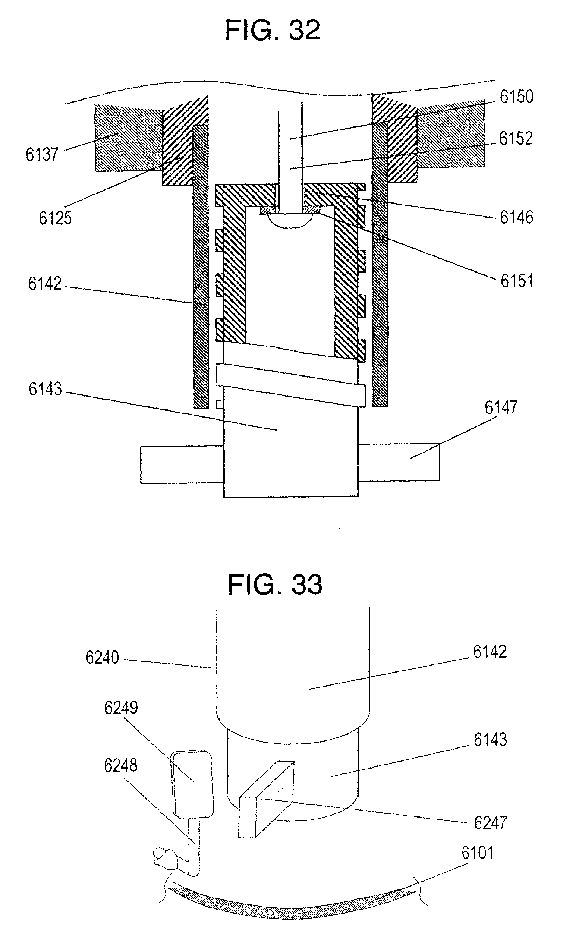

FIG. 30 is a cross-sectional view illustrating a compressor in a fourteenth embodiment of the invention, FIG. 31 is a cross-sectional view illustrating a main part of the compressor in the fourteenth embodiment, and FIG. 32 is a cross-sectional view illustrating a main part of a viscous pump in the fourteenth embodiment.

In FIGS. 30, 31 and 32, oil 6102 is stored in closed container 6101 which is filled with refrigerant gas 6103.

Compressing element 6110 includes: block 6115 which forms cylinder 6113; piston 6117 reciprocatively inserted into cylinder 6113; shaft 6125 having main shaft portion 6120 supported by bearing 6116 of block 6115 and eccentric portion 6122; and connecting rod 6119 for connecting eccentric portion 6122 and piston 6117. Compressing element 6110 forms a reciprocating compressing mechanism.

Electrically-powered element 6135 is fixed below block 6115, and includes stator 6136 connected to an inverter driving circuit (not shown) and rotor 6137 which contains permanent magnet and is fixed to main shaft portion 6120. Electrically-powered element 6135 provides an electric motor for driving an inverter, and is driven at a plurality of driving frequencies including those below 1,200 rpm, for example, by the inverter driving circuit (not shown).

Springs 139 elastically support compressing element 6110 via stator 6136 such that compressing element 6110 is elastically held on closed container 6101.

Viscous pump 6140 soaked with oil 6102 is provided at the lower end of main shaft portion 6120 of shaft 6125.

Next, the structure of viscous pump 6140 is described in detail.

Cylindrical hollow portion 6141 is formed in main shaft portion 6120. Hollow sleeve 142 is fixed to the lower region of cylindrical hollow portion 6141. Sleeve 142 is substantially cylindrical and cap-shaped, whose top and bottom are open. Sleeve 142 is made from iron plate press material which offers comparatively high accuracy in this embodiment, but may be formed from leaf spring steel.

Insertion member 6143 coaxially inserted into cylindrical hollow portion 6141 and sleeve 142 is made from a plastic material which has lower thermal conductivity than the metal material which forms shaft 6125 and possesses refrigerant-resistance and oil-resistance properties such as PPS, PBT, and PEEK. Spiral groove 6144 is engraved on the outer surface of insertion member 6143, whereby oil passage 6145 through which oil flows is provided between spiral groove 6144 and the inner surface of sleeve 142. The difference between the outermost diameter of insertion member 6143 and the inner surface of sleeve 142, i.e., the matching clearance is established in a range from 100µm to 500µm. Insertion member 6143 has bolt hole 6146 at its upper end, and a plurality of first contacting members 6147 at its lower sides off the rotational shaft center of shaft 6125.

Each second contacting member 6148 is fixed to the inner surface of the bottom of closed container 6101 in such a position as to be opposed to each first contacting member 6147 in the rotational direction with a sufficient predetermined clearance from rotating sleeve 142. Both first contacting members 6147 and second contacting members 6148 are completely soaked with oil 6102 stored in the bottom area of closed container 6101. First contacting members 6147 are made from plastic and formed integrally with insertion member 6143, but may be formed by fixing metal wires or fragments, for example, to the lower region of insertion member 6143. Second contacting members 6148 are substantially L-shaped and made from elastic material such as metal wires and fragments.

Bolt 6150 is employed as supporting member 6152 for slidingly connecting insertion member 6143 with sleeve 142. Bolt 6150 inserted through washer 6151 penetrates bolt hole 6146 , and reaches the upper surface of cylindrical hollow portion 6141 to be attached thereto, thereby rotatably connecting insertion member 6143 to main shaft portion 6120 of shaft 6125 and closing the lower end of bolt hole 6146. Washer 6151 is made from a plastic material having high abrasion-resistance property such as self-lubrication characteristic (PPS and PEEK etc.) . Alternatively, bolt 6150 may be formed from a similar self-lubrication material to eliminate washer 6151.

The operation of the compressor having the above structure is herein described.

Main shaft portion 6120 rotates with the rotation of shaft 6125. Sleeve 142 fixed to main shaft portion 6120 rotates in synchronization with the rotation of main shaft portion 6120. Insertion member 6143 is pulled by the rotation of sleeve 142, but the rotation of insertion member 6143 is prevented by the elastic contact between first contacting members 6147 provided on insertion member 6143 and second contacting members 6148 provided on closed container 6101. As a result, oil rises through spiral oil passage 6145 while rotating and being pulled by the inner surface of sleeve 142 due to viscosity. At this stage, oil 6102 rises while rotating not only by the centrifugal force which decreases at low-speed revolution but by a pulling force generated by viscosity. Thus, oil can be drawn up in a stable manner even at the time of low-speed revolution such as 600 rpm.

In the embodiment as described above, first contacting members 6147 and second contacting members 6148 are disposed away from the rotational shaft center of shaft 6125. This arrangement decreases load applied by the moment which is generated through the rotation while first contacting members 6147 and second contacting members 6148 are contacting each other. Also, as both the contacting members elastically contact with each other, impact received is absorbed and material fatigue of the components in relation to the restriction of insertion member 6143 is scarcely caused. Accordingly, the structure of viscous pump 6140 is maintained in a stable condition for a long period of time, and thus a highly reliable compressor can be provided. Moreover, first contacting members 6147 and second contacting members 6148 are not required to have a complicated shape for reducing the load applied by the moment generated through the rotation at the time of the contact. Thus, a considerably simple and inexpensive compressor can be provided.

Since first contacting members 6147 and second contacting members 6148 are soaked with oil 6102, impact caused at the time of the contact between the contacting members is reduced by the viscosity of oil 6102. Also, even if rubbing is caused between the contacting members due to vibration from compressing element 6110, abrasion does not develop owing to the lubricating function of oil 6102. Thus, reliability can be further increased.

Second contacting members 6148 are formed by metal wires or fragments in this embodiment, but may be made from nitrile rubber (NBR) which is comparatively inexpensive and has oil-resistance and refrigerant-resistance properties, if mineral oil or diester synthetic oil is used as oil 6102. The nitrile rubber may be L-shaped as in the embodiment, or may be disposed on the contact portions of the metal wires or fragments. Additionally, it is possible to reduce sound and vibration transmitted to the outside of closed container 6101 at the time of the contact between the contacting members by utilizing the shock absorbing characteristic of the nitrile rubber.

According to this embodiment, insertion member 6143 is rotatably connected to main shaft portion 6120 of shaft 6125 by means of bolt 6150 which is inserted through washer 6151. Thus, the position of insertion member 6143 relative to sleeve 142 fixed at the lower end of main shaft portion 6120 is restricted by this connecting portion, and an almost constant clearance is maintained between insertion member 6143 and sleeve 142. This clearance is maintained by the fact that lateral pressure due to fixation is scarcely caused and also by the oil pressure generated between insertion member 6143 and sleeve 142, and thus there is very few possibility of occurrence of sliding abrasion between insertion member 6143 and sleeve 142.

Spiral groove 6144 is provided on the outer surface of insertion member 6143 to form spiral oil passage 6145 in this embodiment, but may be disposed on the inner surface of sleeve 142 to form oil passage 6145. In this case, the area of the inner surface of the rotational body in contact with oil 6102 is enlarged by adding the surface area of the concaves of the spiral groove. This structure causes large viscous resistance, thereby enhancing oil transfer capability.

### (Embodiment 15)

FIG. 33 is a cross-sectional view illustrating a main part of a compressor in a fifteenth embodiment of the invention.

The fifteenth embodiment is herein described with reference to FIG. 33. Similar numbers are given to the structures similar to those of the fourteenth embodiment, and detailed description of those is omitted.

Insertion member 6143 coaxially inserted into sleeve 142 has a plurality of first contacting members 6247 at its lower sides off the rotational shaft center of shaft 6125.

Each second contacting member 6248 is fixed to the inner surface of the bottom of closed container 6101 in such a position as to be opposed to each first contacting member 6247 in the rotational direction with a sufficient predetermined clearance from rotating sleeve 142. Both first contacting members 6247 and second contacting members 6248 are completely soaked with oil 6102 stored in the bottom area of closed container 6101. First contacting members 6247 are made from plastic and formed integrally with insertion member 6143, but may be formed by fixing metal wires or fragments , for example, to the lower region of insertion member 6143. Second contacting members 6148 are substantially L-shaped and made from elastic material such as metal wires and fragments. Each second contacting member 6248 has metal flat plate 6249 disposed in such a position as to contact with the face of first contact member 6247.

According to this embodiment, since the faces of first contacting members 6247 and second contacting members 6248 contact each other and also receive viscous resistance of oil 6102, the face pressure is securely and extremely decreased by a simple structure. Accordingly, chipping at the contact portion is prevented and thus reliability can be further increased.

In this embodiment, each second contacting member 6148 has metal flat plate 6249 in this embodiment. However, flat plate 6249 may be made from nitrile rubber (NBR) which is comparatively inexpensive and has oil-resistance and refrigerant-resistance properties, or has a coil spring or other means on the contact portion of flat plate 6249 to greatly enhance its shock absorbing characteristic at the time of the contact.

In the invention as described above, both the contacting members are disposed away from the rotational shaft center. This arrangement decreases load applied by the moment which is generated through the rotation at the time of the contact. Also, as both the contacting members elastically contact with each other, impact received is absorbed and material fatigue of the components in relation to the restriction of the insertion member is scarcely caused. Accordingly, as the contacting members are not required to have a complicated structure for reducing the load, the structure of the viscous pump is maintained in a stable condition for a long period of time, and thus a compressor which is inexpensive and highly reliable can be provided.

In the invention, impact caused at the time of the contact between the contacting members is reduced by the viscosity of oil. Also, even if rubbing is caused between the contacting members due to vibration from the compressing element, abrasion does not develop. Thus, a compressor which is inexpensive and highly reliable can be provided.

In the invention, at least either the first contacting members or the second contacting members are made from elastic bodies. Accordingly, the number of the components included is decreased and thus a compressor which is inexpensive and highly reliable can be provided.

In the invention, the elastic body is interposed between the first contacting member and the second contacting member. As a result, comparatively large impact caused by the contact during assembly or transportation of the compressor is reduced, and the positions of the second contacting members are not required to be accurately determined. Thus, a compressor which is inexpensive and highly reliable can be provided.

According to the invention, since the faces of the first contacting members and the second contacting members contact each other, the face pressure is securely more decreased by a simple structure. Accordingly, chipping at the contact portion is prevented and thus a compressor which is inexpensive and highly reliable can be provided.

### Industrial Applicability

A compressor provided according to the present invention is a highly reliable compressor capable of transferring oil in a stable manner even at the time of low-speed driving. Thus, the compressor is applicable to household refrigerators, and also to refrigerant cycles in dehumidifiers, showcases, vending machines and so forth.

## Claims

1. A compressor comprising a closed container which stores oil and accommodates a compressing element for compressing refrigerant and an electrically-powered element for driving the compressing element, wherein:
the electrically-powered element includes a stator and a rotor;
the compressing element includes a shaft which extends in a vertical direction and rotates, and a viscous pump which is formed inside the shaft and communicates with the oil; and
the viscous pump having a cylindrical hollow portion formed in the shaft, an insertion member coaxially and rotatably inserted into the cylindrical hollow portion, a spiral groove formed between the inner surface of the cylindrical hollow portion and the outer surface of the insertion member along a direction where the oil rises, and prevention means for preventing rotation of the insertion member.

2. A compressor as set forth in claim 1, further comprising a second viscous pump connected to the upper region of the viscous pump.

3. A compressor as set forth in claim 2, wherein the second viscous pump includes a lead groove engraved on the outer surface of a main shaft portion of the shaft and the inner surface of a main bearing which supports the main shaft portion.

4. A compressor as set forth in claim 2, further comprising restriction means for restricting movement of the insertion member in rotational and vertical directions.

5. A compressor as set forth in claim 4, wherein the restriction means made from elastic metal wire engages with an engagement hole provided on the insertion member and includes a supporting member whose end is fixed to the stator.

6. A compressor as set forth in claim 4, wherein the restriction means includes at least one supporting member extending from the lower end of the insertion member in an almost horizontal direction, one end of the supporting member being fixed to the stator and the other end of the supporting member being rotatably connected to the end of the supporting member.

7. A compressor as set forth in claim 4, wherein the restriction means is made from elastic metal wire and engages with an engagement groove concaved on the lower end of the insertion member, the restriction means including a supporting member whose end is fixed to the lower region of the stator and a sliding portion formed by an upper bottom of the cylindrical hollow portion and the upper surface of the insertion member.

8. A compressor as set forth in claim 1, wherein a spiral groove is formed on the inner surface of the cylindrical hollow portion along a direction where the oil rises.

9. A compressor as set forth in claim 8, wherein the spiral groove is formed by fixing a spiral component to the inner surface of the cylindrical hollow portion.

10. A compressor as set forth in claim 8, further comprising a bracket whose both ends are fixed to the lower region of the stator and whose center engages with the lower end of the insertion member to support the insertion member.

11. A compressor as set forth in claim 1, wherein the prevention means is an impeller formed on the insertion member to produce viscous resistance between the impeller and the oil.

12. A compressor as set forth in claim 11, wherein the cylindrical hollow portion is formed in a sleeve fixed to the shaft.

13. A compressor as set forth in claim 12, wherein the sleeve is substantially cylindrical and has an upper face, a top of the insertion member being rotatably connected with the upper face of the sleeve.

14. A compressor as set forth in claim 12, wherein the sleeve is substantially cylindrical and has a bottom face, a bottom of the insertion member being rotatably connected with the bottom face of the sleeve.

15. A compressor as set forth in claim 1, wherein the prevention means includes a first permanent magnet disposed in the vicinity of the lower end of the insertion member off the rotational shaft center of the shaft and a second permanent magnet disposed such that the same poles of the first permanent magnet and the second permanent magnet are opposed to each other in the rotational direction.

16. A compressor as set forth in claim 15, wherein the second permanent magnet is directly or indirectly fixed to the closed container.

17. A compressor as set forth in claim 15, wherein the second permanent magnet is directly or indirectly fixed to the electrically-powered element or the compressing element.

18. A compressor as set forth in claim 1, wherein the prevention means includes a first contacting member disposed in the vicinity of the lower end of the insertion member off the rotational shaft center of the shaft and a second contacting member directly or indirectly secured to the closed container or the stator and so positioned as to be opposed to the first contacting member in the rotational direction, the prevention means being provided by bringing the first contacting member into elastic contact with the second contacting member.

19. A compressor as set forth in claim 18, wherein the first contacting member and the second contacting member are disposed within the oil.

20. A compressor as set forth in claim 18, wherein an elastic body is interposed between the first contacting member and the second contacting member.

21. A compressor as set forth in claim 18, wherein at least either the first contacting member or the second contacting member is made from an elastic body.

22. A compressor as set forth in claim 18, wherein the face of the first contacting member contacts the face of the second contacting member.

23. A compressor as set forth in claim 1, further comprising a sleeve fixed to the lower region of the shaft to provide the cylindrical hollow portion, a projection formed on the outer surface of the insertion member, and a receiving portion provided on the sleeve for rotatably receiving a thrust face of the projection.

24. A compressor as set forth in claim 23, wherein the sleeve is forcedly inserted into a hollow portion provided in the lower region of the shaft and fixed to the hollow portion, the receiving portion being formed by the upper end face of the sleeve.

25. A compressor as set forth in claim 23, wherein the sleeve has a large-diameter portion and a small-diameter portion, the receiving portion being formed by a step between the large-diameter portion and the small-diameter portion.

26. A compressor as set forth in claim 25, wherein the receiving portion has a tapered thrust face shape.

27. A compressor as set forth in claim 23, wherein the insertion member is formed from one-piece synthetic resin.

28. A compressor as set forth in any one of claims 2, 8, 15, 18 and 23, wherein the electrically-powered element is driven at driving frequencies including those equal to or lower than a power source frequency.

29. A compressor as set forth in any one of claims 2, 8, 15, 18 and 23, wherein the compressor is driven at driving frequencies including at least those in a range from 600 to 1,200 r/min.

30. A compressor as set forth in any one of claims 2, 8, 15, 18 and 23, wherein the compressing element is elastically supported within the closed container.

31. A compressor as set forth in any one of claims 2, 8, 15, 18 and 23, wherein isobutene is used as refrigerant.
